Europäisches Patentamt

European Patent Office

Office européen des brevets

(19)

(11) Veröffentlichungsnummer : **0 132 453**
**B1**

# (12) EUROPÄISCHE PATENTSCHRIFT

(45) Veröffentlichungstag der Patentschrift :
27.05.87

(51) Int. Cl.⁴ : **H 04 N   1/40**

(21) Anmeldenummer : **83107477.8**

(22) Anmeldetag : **29.07.83**

(54) Verfahren und Einrichtung zum Minimieren von Fehlern bei der digitalen Verarbeitung von elektrischen Signalen.

(43) Veröffentlichungstag der Anmeldung :
**13.02.85 Patentblatt 85/07**

(45) Bekanntmachung des Hinweises auf die Patenterteilung : **27.05.87 Patentblatt 87/22**

(84) Benannte Vertragsstaaten :
**AT BE CH DE FR GB IT LI NL SE**

(56) Entgegenhaltungen :
**GB-A- 2 011 759**
**US-A- 4 196 452**
**US-A- 4 366 507**

(73) Patentinhaber : **DR.-ING. RUDOLF HELL GmbH**
**Grenzstrasse 1-5**
**D-2300 Kiel 14 (DE)**

(72) Erfinder : **Fischer, Gerhard**
**Mainstrasse 19**
**D-6050 Offenbach (DE)**
Erfinder : **Scheuter, Karl R.**
**Schillerstrasse 9**
**D-6100 Darmstadt 13 (DE)**

## Beschreibung

Die Erfindung betrifft ein Verfahren und eine Einrichtung zum Minimieren von Fehlern bei der digitalen Verarbeitung von elektrischen Signalen, insbesondere zur Filterung von Folgen oder Gruppen rauschbehafteter Signale, die digital weiterverarbeitet werden, wobei die durch die Digitalstufen erzeugten Störungen minimiert werden.

Aus US-A-4 196 452 ist ein Verfahren zum Minimieren von Fehlern bei der digitalen Verarbeitung elektrischer Signal bekannt, bei welchem der Fehler zwischen dem tatsächlichen und wiedergegebenen Grauwert eines Bildelements bestimmt wird und bei welchem ein Schwellwert in Übereinstimmung mit einem solchen Fehler ermittelt wird.

Insbesondere soll sogenanntes « Contouring » zwischen zwei benachbarten Blocks gerasterter Bildinformation vermieden werden, wozu der mittlere Grauwert eines Bilddatenblocks mit dem eines anderen Datenblocks verglichen wird, der Fehler ermittelt und bei der Rasterung des nächsten Bilddatenblocks im Sinne einer Fehlerkorrektur berücksichtigt wird.

Es sind weiterhin bereits Filter zum Beseitigen irrelevanter Informationen bzw. Störungen bekannt, die z. B. in folgendem Fall eingesetzt werden. Will man beispielsweise einen Ereignisraum X aufzeichnen und stellt fest, daß der statt dessen erfaßte und abgebildete Ereignisraum Y sich mindestens teilweise vom Ereignisraum X unterscheidet, so sind zwei Typen von Störungen ausschlaggebend.

Zum ersten können bei der Erfassung des Ereignisraumes X, der aus einer Anzahl unterscheidbarer Ereignisse $x_i$ besteht, außer dessen Ereignissen $x_i$ auch zufällige Störungen registriert werden, die sich den Ereignissen $x_i$ überlagern. Anstatt des Ereignisraumes X liegt nach der Erfassung bereits der gestörte Ereignisraum X* vor.

Eine Gruppe von identischen Ereignissen $x_l$ des Ereignisraumes x hat, isoliert von den übrigen Ereignissen dieses Raumes betrachtet, keinen Informationsgehalt, weil sich diese Ereignisse voneinander nicht unterscheiden. Überlagern sich dieser Gruppe identischer Ereignisse jedoch zufällig Störereignisse, so wächst der Informationsgehalt der Gruppe infolge der Störungen, und so entstehen aus ihr unterscheidbare Ereignisse $x_i^*$. Entsprechend ist auch die Anzahl der insgesamt unterscheidbaren Ereignisse im gestörten Ereignisraum X* größer als im Ereignisraum X.

Zum zweiten können bei der Abbildung des gestörten Ereignisraumes X* im Ereignisraum Y weitere Störungen dadurch entstehen, daß die Anzahl der im Ereignisraum X unterscheidbaren Ereignisse $y_k$ aus physikalischen oder wirtschaftlichen Gründen begrenzt ist. Die erfaßten Ereignisse $x_i^*$ des gestörten Ereignisraumes X* werden in den Ereignissen $y_k$ des Ereignisraumes Y abgebildet. Normalerweise ist die Anzahl der unterscheidbaren Ereignisse im abgebildeten Ereignisraum Y dann wieder kleiner als im erfaßten gestörten Ereignisraum X*. Daher werden die im Ereignisraum X* enthaltenen Störungen im Ereignisraum Y teilweise verstärkt und nur teilweise unterdrückt. Die vorher im Idealfall meist noch statistisch verteilten Störereignisse verlieren dadurch weitgehend ihre statistische Verteilung.

In vielen Anwendungsfällen sind die Ereignisse $y_k$ des abgebildeten Ereignisraumes Y digitale Daten ; die Anzahl der Digitalstufen ist zugleich die Anzahl der unterscheidbaren Ereignisse.

Insbesondere bei der Aufzeichnung von Folgen oder Gruppen rauschbehafteter Signale durch digitale Daten können die bei der Aufzeichnung entstehenden Störungen sich zufällig akkumulieren. Diese Akkumulationen erstrecken sich normalerweise nur über kleine Aufzeichnungsbereiche. Sie wirken jedoch in der Praxis, z. B. in der Bildverarbeitung, wesentlich störender als einzelne zufällige Aufzeichnungsfehler.

Daher besteht die Aufgabe, die durch die Digitalisierung verursachten Aufzeichnungsfehler durch ein entsprechendes Filter möglichst klein zu halten und den maximal entstehbaren Aufzeichnungsfehler sicher zu begrenzen.

Hierzu ist es bekannt, den Ereignisraum Y mit so vielen Ereignissen, z. B. Digitalstufen, auszustatten, daß die Aufzeichnungsfehler weitgehend, aber nicht sicher, vermeidbar sind. Dies ist jedoch häufig physikalisch nicht ausreichend möglich oder einfach unwirtschaftlich.

Darüber hinaus sind aus dem Bereich der digitalen Bildverarbeitung einige Verfahren zur Filterung von Bilddaten bekannt, die aus verrauschten Bilddaten die jeweils gewünschte Information ausfiltern, wobei die gewünschte Information durch spezifische Merkmale charakterisiert ist (z. B. Informatik Fachbereiche Nr. 20, DAGM Symposium Karlsruhe, Springer Verlag 1979). Es sind auch Verfahren zur Reduzierung der bei der digitalen Bildverarbeitung entstehenden Digitalisierungsfehler bekannt, die die Aufzeichnungsfehler der einzelnen Bildpunkte aufsummieren und bei Überschreiten einer Grenzfehlerschwelle eine Korrektur an einzelnen Bildpunkten einleiten. Das Aufsummieren der Aufzeichnungsfehler erfolgt dabei entlang einer Linie, die entweder zur zeilenweisen Bildabtastung dient (DE-OS 23 63 460, DE-OS 28 12 821) oder die einem Bildausschnitt entsprechende Matrix von Abtastpunkten zeilenweise durchläuft (« MECCA » Habilitationsschrift von Peter Stucki an der Rechts- und Staatswissenschaftl. Fakultät der Universität Zürich 1981).

Weiterhin sind Verfahren bekannt, um Bildteile gleichen oder etwa gleichen Tonwerts innerhalb von Bildausschnitten digital wiederzugeben (DE-OS 29 31 098, EP-OS 0 074 422).

Kritik des Standes der Technik

2

Die einzelnen Verfahren zur Filterung und Vermeidung von Aufzeichnungsfehlern sind jedoch nicht aufeinander abgestimmt und auch kaum miteinander vereinbar. Dies führt z. B. dazu, daß die digitale Bildwiedergabe in der Regel entweder ohne Filter und nur mit Korrektur von Aufzeichnungsfehlern entlang einer Bildlinie ausgeführt wird oder aus den Bilddaten nur spezielle Informationen, z. B. Kanten, ausgefiltert werden. In beiden Fällen können erhebliche und daher z. B. visuell wahrnehmbare Aufzeichnungsfehler entstehen.

Der Erfindung liegt daher die Aufgabe zugrunde, die durch die Zuordnung im digital aufgezeichneten Ereignisraum Y verursachten Störungen so weit zu reduzieren, daß eine möglichst kleine Auswahl von Ereignissen $y_k$ zur Aufzeichnung der zugehörigen gestörten Ereignisse $x_i^*$ mit einer gewünschten Genauigkeit ausreicht.

Diese Aufgabe wird erfindungsgemäß dadurch gelöst, daß ein digitales Eingangssignale in ein digitales Nutzsignal und in ein digitales Fehlersignal, welches die Abweichung des Nutzsignals vom Eingangssignal wiedergibt, zerlegt wird, indem das Eingangssignal entsprechend einer vorgegebenen niedrigeren Auflösung als das Eingangssignal in das Nutzsignal mit so viel Digitalstufen umgewandelt wird, wie der vorgegebenen niedrigeren Auflösung entsprechen und indem das Fehlersignal durch Vergleich des Eingangssignals mit dem Nutzsignal erzeugt wird, daß für mehrere Werte des Nutzsignals aus den jeweiligen Fehlersignalen ein Summenfehler gebildet wird, indem die jeweiligen Fehlersignale addiert werden, daß geprüft wird, ob der Summenfehler von mehreren aufeinanderfolgenden Nutzsignalwerten jeweils einen vorgegebenen oberen oder unteren Schwellwert überschreitet, daß im Falle, daß ein Schwellwert überschritten wird, derjenige Fehlerwert des Nutzsignals ermittelt wird, der diesem Schwellwert am nächsten kommt und daß das Nutzsignal und damit das Fehlersignal dieses Signalwerts derart korrigiert werden, daß der Summenfehler wieder den Schwellwert unterschreitet, indem mindestens eine der Digitalstufen des Nutzsignals geändert wird.

Eine vorteilhafte Einrichtung zur Durchführung des Verfahrens ist im Patentanspruch 13 angegeben. Vorteilhafte Weiterbildungen der Erfindung ergeben sich aus den Patentansprüchen 2 bis 12 sowie 14 bis 16.

Ein Vorteil der Erfindung besteht darin, daß das erfindungsgemäße Filterverfahren das Auftreten akkumulierter Aufzeichnungsfehler verhindert. Der maximal verbleibende Aufzeichnungsfehler ist definiert und kann zur Bestimmung derjenigen Digitalstufenanzahl, die zum Erzielen der gewünschten Aufzeichnungsgenauigkeit notwendig ist, benutzt werden. Weitere erzielbare Vorteile bestehen insbesondere auch darin, daß z. B. die Bildsignale nur dann gefiltert werden, wenn sie ungefiltert nicht störungsfrei digital aufgezeichnet werden können, und daß sie andernfalls auch nur soweit gefiltert werden, daß ihr Aufzeichnungsfehler bis auf den durch die Digitalstufen vorgegebenen Restfehler beseitigt ist. Ein weiterer Vorteil besteht darin, daß das erfindungsgemäße Filterverfahren dem visuellen Wahrnehmungssinn weitgehend nachempfunden ist, so daß eine gute Akzeptanz zu erwarten ist.

## Beschreibung der Ausführungsbeispiele

Beispielhafte Ausführungsformen und Anwendungsbeispiele der erfindungsgemäßen Einrichtung werden im folgenden anhand der Figuren 1-21 näher beschrieben. Es zeigen :

Figur 1   Ein Blockschaltbild zur Einordnung der erfindungsgemäßen Einrichtung in den Reproduktionsprozeß.

Figur 2   Ein Blockschaltbild der erfindungsgemäßen Einrichtung.

Figur 3   Ein Anwendungsbeispiel für die einstufige Filterung gemäß Fig. 2 von Daten eines zweidimensionalen Datenrasters.

Figur 4   Ein Anwendungsbeispiel für die zweistufige Filterung gemäß Fig. 2 von Daten eines zweidimensionalen Datenrasters.

Figur 5a und 5b   Ein Anwendungsbeispiel für die vierstufige Filterung gemäß Fig. 2 von Daten eines eindimensionalen Datenrasters.

Figur 6   Ein Anwendungsbeispiel für die einstufige Filterung gemäß Fig. 2 von Daten eines dreidimensionalen Datenrasters.

Figur 7   Ein Anwendungsbeispiel für die zweistufige Filterung gemäß Fig. 2 von Daten eines zweidimensionalen Datenbereiches.

Figur 8   Eine erste vorteilhafte Weiterbildung der erfindungsgemäßen Einrichtung gemäß Fig. 2.

Figur 9   Ein Anwendungsbeispiel für die zweistufige Filterung gemäß Fig. 8 von Daten eines zweidimensionalen Datenbereiches.

Figur 10   Eine zweite vorteilhafte Weiterbildung der erfindungsgemäßen Einrichtung gemäß Fig. 2.

Figur 11   Ein Blockschaltbild zur Einordnung der erfindungsgemäßen Einrichtung in den heute praxisüblichen Reproduktionsablauf.

Figur 12   Ein Blockschaltbild eines Ausführungsbeispiels der Erfindung.

Figur 13   Ein Beispiel eines Digitalumformers.

Figur 14a und 14b Eine detaillierte Darstellung des Digitalumformers der Fig. 13.

Figur 15   Ein Beispiel fur eine Zwischenspeichereinrichtung.

Figur 16   Ein detaillierterer Aufbau der Einrichtung gemäß Fig. 15.

Figur 17 Ein Beispiel für eine Korrektureinrichtung gemäß Fig. 12.

Figur 18 Eine detailliertere Darstellung einer Baugruppe der Korrektureinrichtung gemäß Fig. 17.

Figur 19 Eine detailliertere Darstellung einer weiteren Baugruppe der Korrektureinrichtung gemäß Fig. 17.

Figur 20 Eine detailliertere Darstellung einer weiteren Baugruppe der Korrektureinrichtung gemäß Fig. 17 und

Figur 21 Ein Anwendungsbeispiel der erfindungsgemäßen Einrichtung.

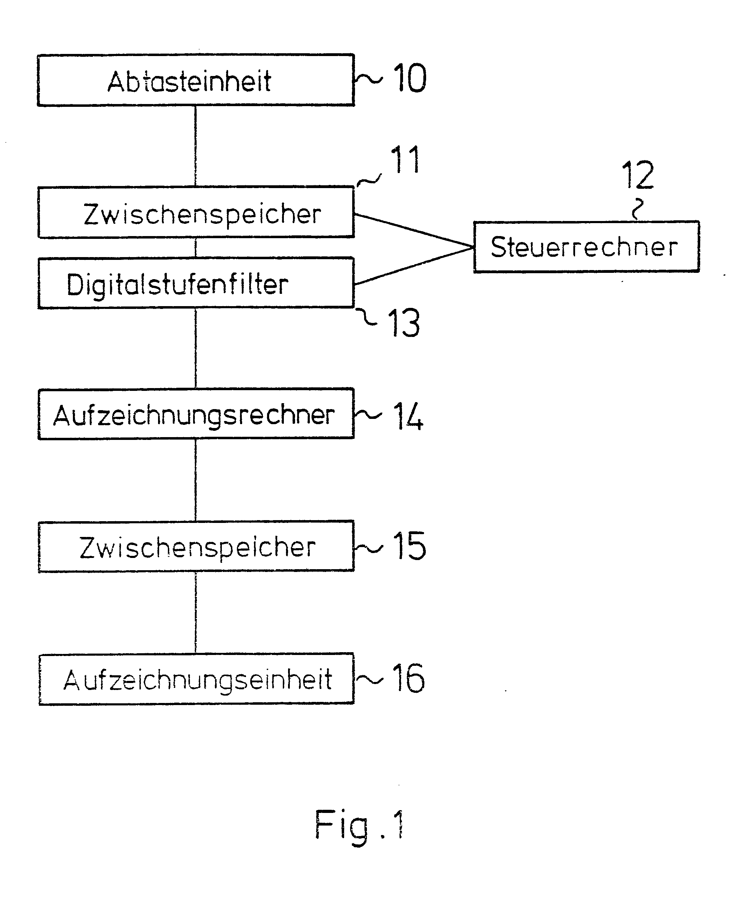

Figur 1 zeigt ein Beispiel zur Anwendung des erfindungsgemäßen Filters, Digitalstufenfilter genannt, im Reproduktionsprozeß. Die Dichtewerte des Bildoriginals werden in der Abtasteinheit 10 abgetastet und eventuell auch aufbereitet, so daß die Ausgangssignale der Abtasteinheit den gewünschten Dichtestufen entsprechen. Als Abtasteinheit können z. B. die bekannten Scanner zur Anwendung kommen, welche teilweise Farb- und Korrekturrechner sowie Analog-Digitalwandler aufweisen. Als Abtasteinheit kann jedoch ebenso gut eine Fernsehkamera oder ein anderer optischelektronischer Wandler dienen, und das Ausgangssignal der Abtasteinheit kann analog oder digital vorliegen.

Die Abtasteinheit 10 kann mit einem Zwischenspeicher 11 verbunden sein, der seinerseits mit dem erfindungsgemäßen Digitalstufenfilter 13 sowie einem Steuerrechner 12 verbunden sein kann, wobei der Steuerrechner den Datentransport steuert und selbst eine Eingabemöglichkeit zum Verändern der Bilddaten aufweisen kann. Die erfindungsgemäße Einrichtung ist jedoch auch ohne Zwischenspeicher und Steuerrechner verwendbar, wenn in einer entsprechenden Ausführungsform der erfindungsgemäßen Einrichtung ihr Eingang an den Ausgang der Abtasteinheit angepaßt ist.

Das erfindungsgemäße Digitalstufenfilter 13 ist mit einem Aufzeichnungsrechner 14 verbunden, der z. B. eine der Digitalstufe entsprechende Verteilung oder Anordnung zu belichtender oder zu bedruckender Elementarflächen aus einem Speicher abrufen oder selbst berechnen kann.

Die Verteilung wird anschließend auf einen Zwischenspeicher 15 übertragen. Der Zwischenspeicher hat jedoch zur Einordnung der Erfindung keinen direkten Bezug und kann bei Belieben entfallen.

Die Baugruppen 11 bis 15 können in bekannter Weise zu einem Arbeitsplatz zusammengefaßt werden, z. B. System CHROMACOM der Firma Dr. Hell GmbH, Kiel, Germany.

Dem Zwischenspeicher 15 schließt sich in bekannter Weise noch eine Aufzeichnungseinheit 16 an. Als Aufzeichnungseinheit kann in der beispielhaften Anordnung jedes Gerät dienen, das eine zweidimensionale Datenaufzeichnung in digitaler Form gestattet, z. B. ein Scanner oder ein Drucker oder ein Monitor.

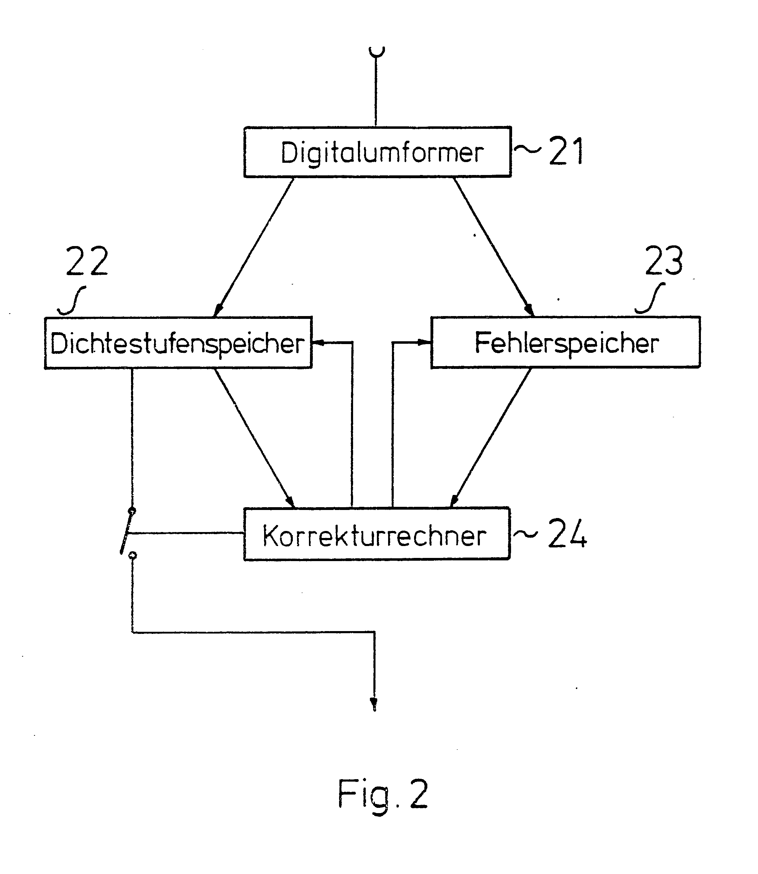

Fig. 2 zeigt das Blockschaltbild einer einfachen Ausführungsform der erfindungsgemäßen Einrichtung.

Die einem Abtastbereich entsprechenden Dichtewerte werden einem Zwischenspeicher oder einer Abtasteinheit direkt entnommen und dem Digitalumformer 21 zugeführt. Dieser berechnet für jeden Bildpunkt aus dem Abtastsignal die Digitalstufe, die der aufzeichnungsseitigen Dichtestufe entspricht, und den Fehler, um den die Digitalstufe vom Abtastsignal abweicht. Der Digitalumformer 21 kann einen Analog-Digital-Wandler enthalten, falls die Bilddaten in analoger Form in den Dichtestufenrechner gelangen, und besteht dann im übrigen aus einem Digitalrechner oder er besteht zunächst aus einem Analogrechner, und seine Ausgangssignale werden anschließend erst digitalisiert. Hierzu folgendes Beispiel : Die Dichtewerte des Zwischenspeichers 11 in Figur 1 können z. B. digitalisiert sein mit 8 bit Auflösung, d. h. in 256 Stufen, und die Abtastung kann z. B. in Quadraten mit 125 µm Kantenlänge entsprechend einem Rasterquadrat eines Punktrasters mit der Rasterlinienzahl $r_z$ = 80 Linien/cm erfolgt sein. Die Fläche der sehr kleinen druckenden Punkte betrage in der Reproduktion z. B. 30 × 30 µm², so daß also 16 Dichtestufen je Abtastpunkt wiedergegeben werden können. Die Dichtstufe eines Abtastpunktes betrage z. B. 139. Aufgabe des Digitalumformers 21 ist nun die Berechnung der reproduktionsseitigen Dichtestufe und des zugehörigen Fehlers für jeden Aufzeichnungspunkt.

Die reproduktionsseitige Dichtestufe $D_R$ ergibt sich aus den möglichen Dichtestufen der Abtastung (0, 1, 2, .... 255) und der Reproduktion (0, 1, 2, .... 16) und aus dem Abtastwert z. B. zu

$$D_{Ra} = 139 \cdot 16/255 = 8,7216, \text{ und daraus } D_R = 9$$

Als Fehlersignal kann z. B. der relative Fehler zu

$$D = 9 \cdot 8,7216/16 = + 1,74 \%$$

berechnet werden oder ein ihm entsprechender Absolutfehler $F_A$

$$F_A = 9 \cdot 16 - 139 = + 5$$

Wie man sieht, ist die dem Abtastwert 139 nächstliegende reproduktionsseitige Dichtestufe 9, die jedoch dem Abtastwert 9 ⁄ 16 = 144 entsprechen würde. Der Absolutfehler $F_A$ gibt also an, daß der Abtastwert 139 nur um den Absolutfehler + 5 verfälscht reproduziert werden kann :

$$(139 + 5) : 16 = 144 : 16 = 9$$

Der Absolutfehler kann im gewählten Beispiel Werte von

— 7, — 6 , ... 0,1 ... 6, 7, 8 annehmen.

Die Berechnung der reproduktionsseitigen Dichtestufe und des zugehörigen Fehlers kann auch entsprechend einer Kennlinie, z. B. der reproduktionsseitigen Dichtekennlinie (Dichte als Funktion des Flächendeckungsgrades bei der gewählten Punktgröße), oder mit Hilfe eines Speichers, aus dem die der gewünschten Dichtestufe entsprechende reproduktionsseitige Dichtestufe abgerufen wird, erfolgen.

Vom Fehlerspeicher 23 gelangen die Fehlersignale zu einem Korrekturrechner 24, der den Akkumulationsfehler mehrerer Abtastpunkte (z. B. 9) berechnet und in einem Dichtestufenspeicher 22, der ebenfalls die Signale vom Digitalumformer 21 erhält, die gespeicherten Dichtestufen so lange verändert, bis der Akkumulationsfehler ausreichend klein, d. h. innerhalb der gewünschten Aufzeichnungsgenauigkeit ist. In diesem Fall sind auf der entsprechenden Reproduktionsfläche 9 $\times$ 16 = 144 Dichtestufen reproduzierbar und der Akkumulationsfehler beträgt höchstens eine halbe Dichtestufe, also 1/288 Dichtestufe (entspricht 0,34 %).

Liegt der Akkumulationsfehler des Abtastbereiches außerhalb des für den einzelnen Abtastpunkt beschriebenen Fehlerbereiches, so ist eine Korrektur, die einer Tiefpaßfilterung entspricht, durchführbar. Das Korrekturverfahren wird anhand einiger im folgenden aufgeführten Figuren näher erläutert.

Wenn der Akkumulationsfehler ausreichend reduziert ist, werden die im Dichtestufenspeicher 22 in Figur 2 gespeicherten digitalen Bilddaten z. B. an den Aufzeichnungsrechner 14 in Figur 1 übergeben.

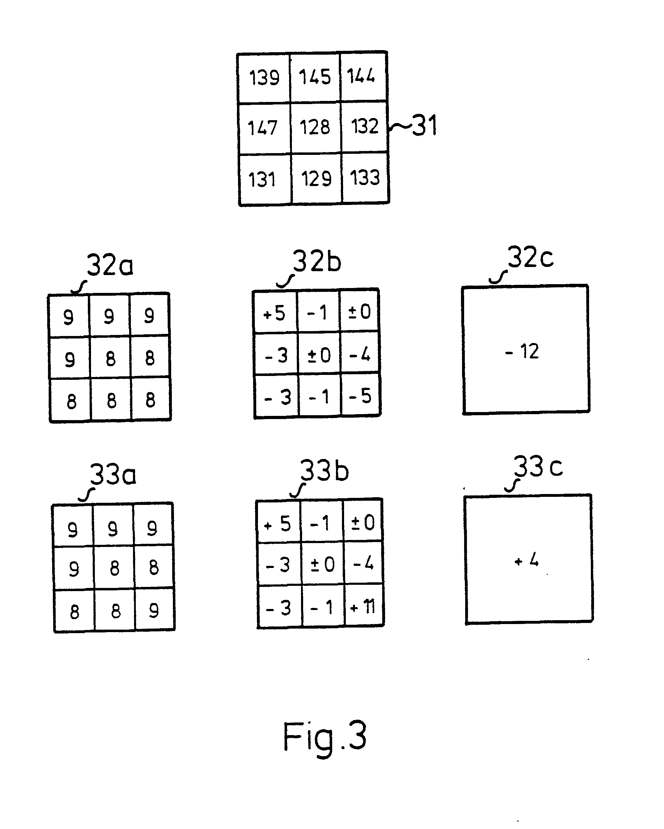

Figur 3 zeigt ein Ausführungsbeispiel für das erfindungsgemäße Filterverfahren. Die bei der Abtastung gewonnenen Dichtewerte eines Abtastbereiches sind in der Matrix 31 zusammengestellt, aus der zunächst die zugehörige Dichtestufenmatrix 32a und die Fehlermatrix 32b und schließlich der Akkumulationsfehler des Abtastbereiches 32c berechnet werden, so daß mit einer einstufigen Korrektur die Dichtestufenmatrix 33a und die zugehörige Fehlermatrix 33b entstehen und schließlich der Akkumulationsfehler 33c minimal ist.

Die Dichtewerte der Abtastmatrix 31 sind z. B., wie oben beschrieben, in 256 Dichtestufen erfaßt worden und nun können beispielsweise je Abtastpunkt nur 16 Dichtestufen aufgezeichnet werden. Daraus lassen sich für jeden Abtastpunkt die reproduktionsseitige Dichtestufe $D_R$ und der Absolutfehler $F_A$ bestimmen (siehe Beschreibung zu Fig. 2), so daß die jeweilige Dichtestufe in eine Matrix 32a und der dazugehörige Absolutfehler in eine Matrix 32b übertragen werden können.

Als Summe aller Absolutfehler der Fehlermatrix entsteht der Akkumulationsfehler des Abtastbereiches 32c (5 — 1 + 0 — 3 + 0 — 4 — 3 — 1 — 5 = — 12). Da er außerhalb des Bereiches {— 7, — 6, ... 7, 8} liegt, ist eine Korrektur durchführbar, wodurch die mittlere Dichte des Abtastbereiches richtig wiedergegeben wird, indem z. B. einer der Abtastpunkte eine andere als die oben berechnete Dichtestufe erhält.

Die Dichtestufe eines Abtastpunktes kann zu diesem Zweck z. B. um eine Stufe erhöht werden. Dadurch wird der zugehörige Absolutfehler um + 16 vergrößert und mit ihm der Akkumulationsfehler des Abtastbereiches.

Damit weiterhin jeder Abtastpunkt mit möglichst kleinem Fehler übertragen werden kann, wählt man zweckmäßig einen Punkt mit möglichst großem negativem Fehler (— 5) zur Korrektur aus.

Die Korrektur kann auch mehrere Abtastpunkte (z. B. 3) betreffen, wenn der Akkumulationsfehler entsprechend groß (z. B. — 43) ist.

Durch die Korrektur entstehen die Dichtestufenmatrix 33a, die zugehörige Fehlermatrix 33b und der Akkumulationsfehler 33c.

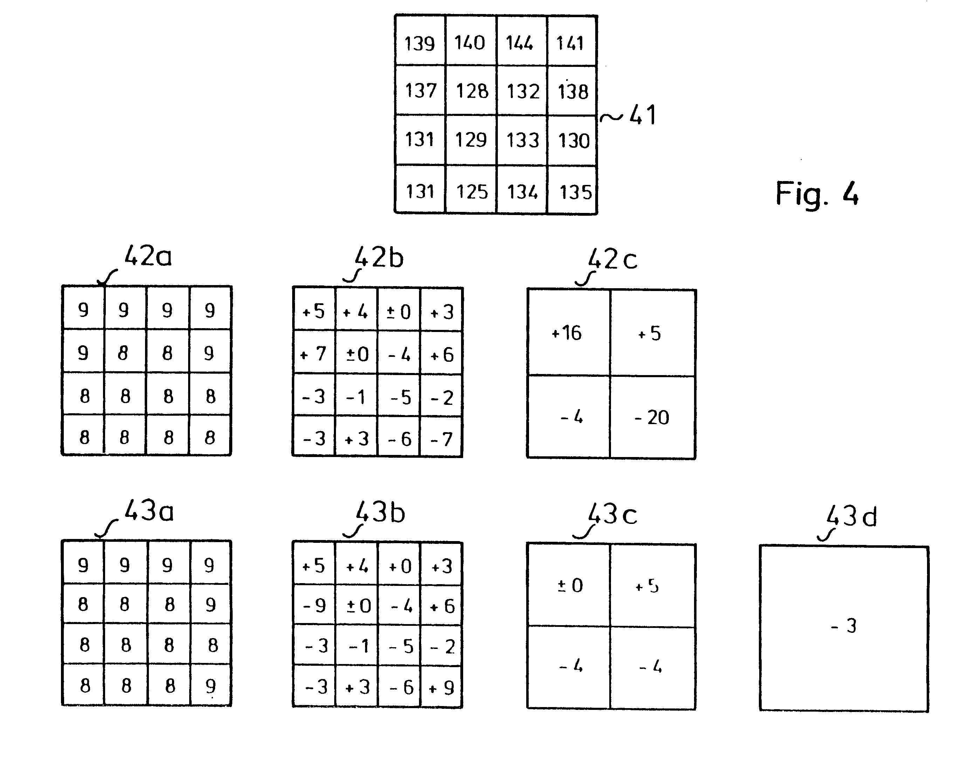

Figur 4 zeigt ein Anwendungsbeispiel, wobei die anhand von Figur 3 beschriebene Korrektur in zwei Stufen ausgeführt wird. Die Dichtewerte eines beispielhaften Abtastbereiches sind in einer Matrix 41 zusammengefaßt.

Daraus sind, wie oben beschrieben, die reproduktionsseitigen Dichtestufen berechnet und in der Matrix 42a zusammengestellt, die Matrix 42b enthält die jeweiligen Absolutfehler. In der Matrix 42c sind die Akkumulationsfehler von jeweils vier Abtastpunkten enthalten (z. B. 5 + 4 + 7 + 0 = 16).

Das Korrekturverfahren ist bereits in Figur 3 beschrieben worden. Durch seine Anwendung entstehen im gewählten Beispiel die Matrizen 43 a-d, wobei in 43a die korrigierte Dichtestufenmatrix entstanden ist, in 43b die zugehörige Fehlermatrix, in 43c die Akkumulationsfehlermatrix, in 43d schließlich der Akkumulationsfehler des Abtastbereiches. Da dieser innerhalb des Bereiches {— 7, — 6, ... 7, 8} liegt, ist der zweite Korrekturschritt in diesem Fall nicht auszuführen. Die anhand der Figuren 3 und 4 gezeigten Ausführungsformen zeichnen sich insbesondere durch ihren einfachen Grundaufbau aus.

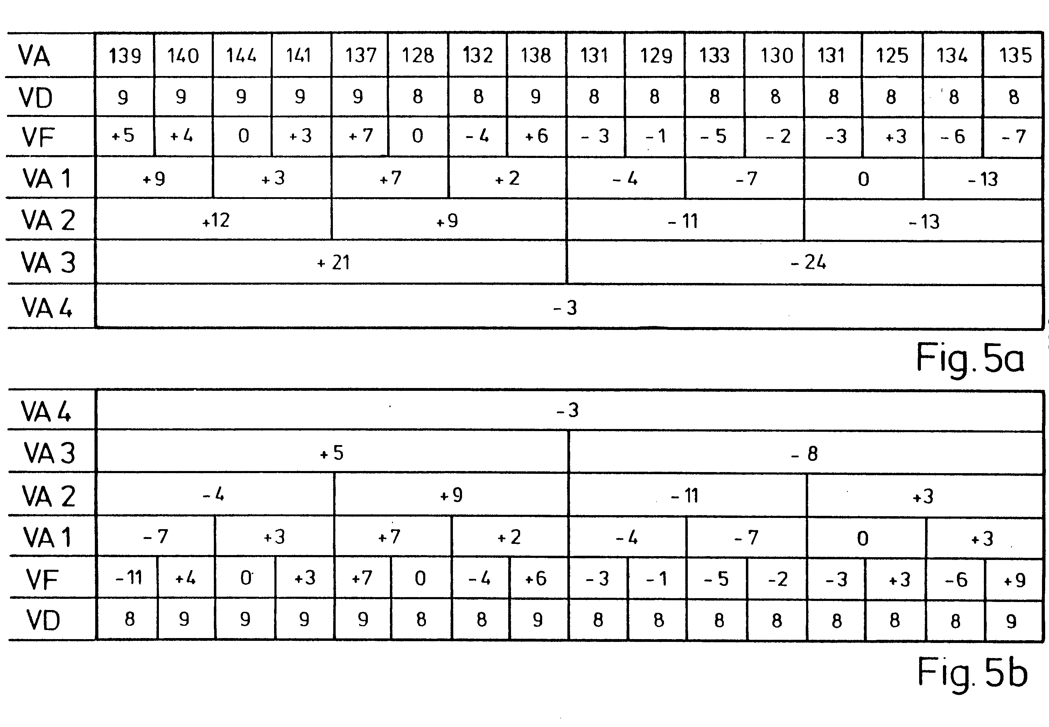

Das erfindungsgemäße Filterverfahren ist darüber hinaus auch für mehrstufige und mehrdimensionale Korrektur anwendbar. Figur 5 zeigt ein Anwendungsbeispiel für vierstufige eindimensionale rastergebundene Korrektur. Figur 5a zeigt in tabellarischer Form die rauschbehafteten Abtastwerte, die ihrem eindimensionalen Charakter entsprechend als Vektor der Abtastwerte VA bezeichnet sind und z. B. Dichtewerte sein können, die entlang einer Abtastlinie aufgenommen wurden. Die zweite Zeile enthält den daraus berechneten Dichtestufenvektor VD und die dritte den Vektor der zugehörigen Digitalisierungsfehler VF. Die weiteren Zeilen enthalten die Vektoren der Akkumulationsfehler der einzelnen Stufen.

die als VA1, VA2, VA3 und VA4 ihrer Stufenzahl entsprechend geordnet sind. Da der Akkumulationsfehler der 4. Stufe innerhalb des Bereiches {—7, —6, ... 7, 8} liegt, ist er nicht weiter korrigierbar. Die Akkumulationsfehler der dritten Stufe dagegen können verkleinert werden, da sie verschiedene Vorzeichen haben, korrigierbar groß sind und entsprechend der hierarchischen Struktur der Akkumulationsfehlerbildung benachbart sind. Die Korrektur ist in Figur 5b ausgeführt, wobei Stufe für Stufe entsprechend der Stufenhierarchie zur Fehlerkorrektur durchlaufen wird und die Korrektur immer so ausgeführt wird, daß die verbleibenden Akkumulationsfehler der entsprechenden Stufe möglichst klein bleiben. Die Akkumulationsfehler der zweiten Stufe können im vorliegenden Fall nicht weiter verkleinert werden, weil der Akkumulationsfehler + 9 der 2. Stufe dem Akkumulationsfehler + 5 der 3. Stufe zugeordnet ist, der Akkumulationsfehler — 11 der 2. Stufe ist dagegen dem Akkumulationsfehler — 11 der 3. Stufe zugeordnet. Daher würde ihre Korrektur das Anwachsen der zugehörigen Akkumulationsfehler der 3. Stufe verursachen.

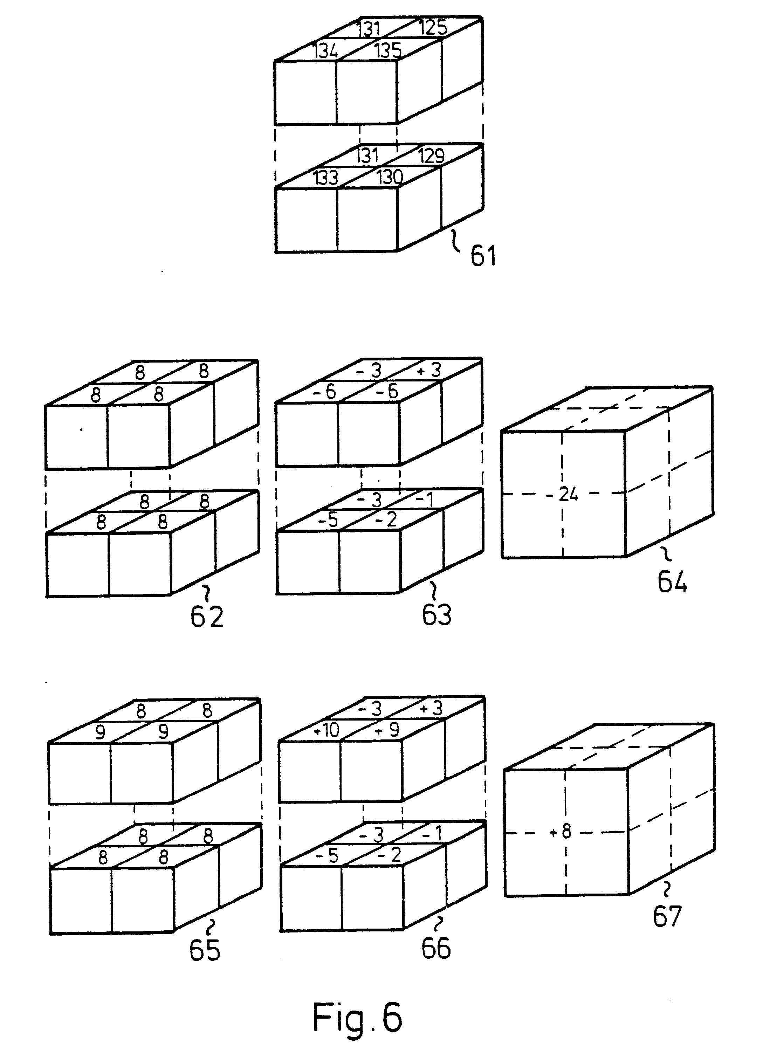

Figur 6 zeigt ein Anwendungsbeispiel für die einstufige dreidimensionale Korrektur, die z. B. zur Filterung für holographische Bilder anwendbar ist. Aus den Daten der Abtastmatrix 61 sind die Digitalstufenmatrix 62 und Fehlermatrix 63 punktweise berechnet. Der Akkumulationsfehler des Volumenelementes 4 führt zu einer Korrektur an zwei Elementen. Die korrigierte Digitalstufenmatrix 65 und Fehlermatrix 66 verursachen jetzt lediglich den Akkumulationsfehler + 8, der nicht weiter korrigierbar ist, in 67.

Bei der Ausführung des Korrekturverfahrens in einem Digitalrechner wird die Korrektur normalerweise, wie in Figur 5 dargestellt, durchgeführt, wobei sich bei mehrdimensionaler Korrektur andere, der Anordnung der Elemente im Rechnerzyklus entsprechende Hierarchiestrukturen ergeben. Das Filterverfahren ist deshalb grundsätzlich zur beliebig vielstufigen und beliebig dimensionalen Filterung anwendbar.

Die anhand der Figuren 3, 4, 5 und 6 gezeigten Ausführungsformen des erfindungsgemäßen Filterverfahrens sind an ein vorgegebenes Aufzeichnungsraster gekoppelt und haben daher noch den Nachteil, daß die Fehlerkorrektur sich immer auf einzelne Bildpunkte auswirkt und der Fehler an den zur Korrektur ausgewählten Bildpunkten geringfügig vergrößert werden muß, um das Akkumulieren von Digitalisierungsfehlern zu verhindern.

Dieser Nachteil kann jedoch vermieden werden, wenn die Hierarchiestrukturen zur Korrektur nicht fest vorgegeben sind. Als Kriterium zur Ableitung der Hierarchiestruktur aus den zu verarbeitenden Daten kann z. B. deren Signalpegel — bei Bilddaten i. A. deren Dichtestufe — dienen. Daher ist es möglich, das erfindungsgemäße Filterverfahren weitgehend an die zu verarbeitenden Daten anzupassen. Das Anpassen der Hierarchiestruktur an die Bilddaten gewährleistet beispielsweise, daß kleinste Signalunterschiede zwischen den Bildpunkten erhalten bleiben, so daß auch Feinstrukturen, die sich über nur wenige Bildpunkte erstrecken, entsprechend der gewünschten Aufzeichnungsgenauigkeit abgebildet werden können.

Die im folgenden aufgeführten Ausbildungsformen des erfindungsgemäßen Filterverfahrens eignen sich in besonderem Maß zur Wiedergabe von mindestens zweidimensionalen Bilddaten, z. B. im Druckprozeß.

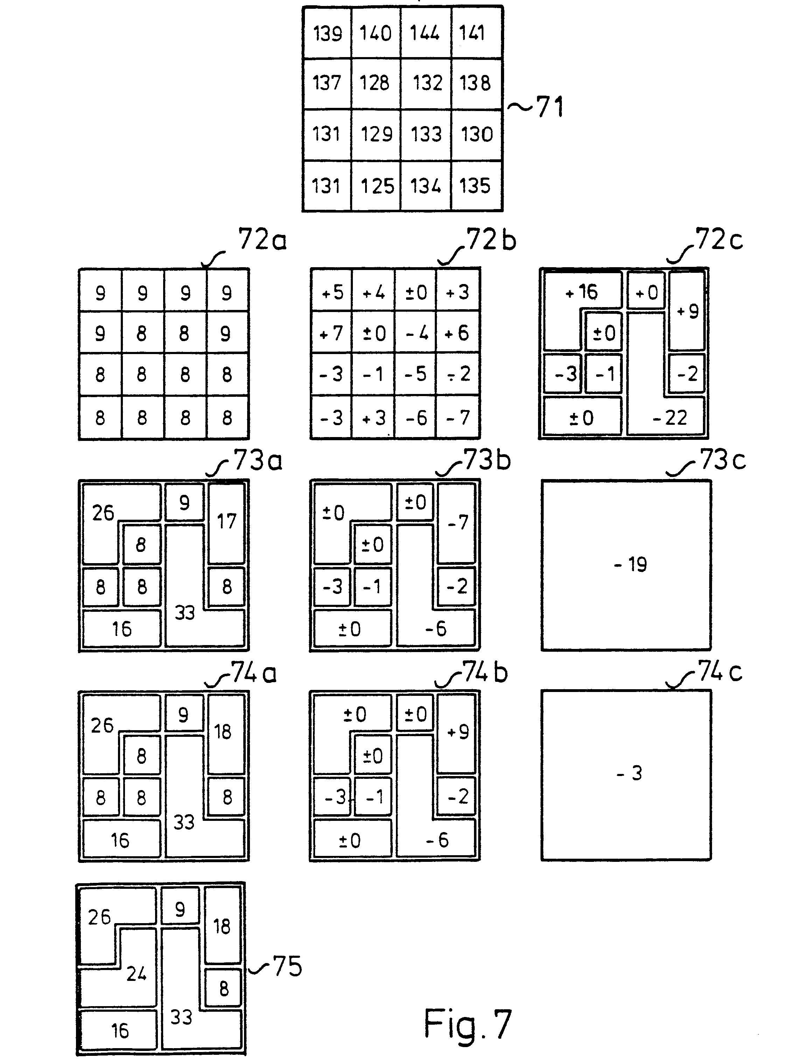

Anhand von Figur 7 wird eine beispielhafte Ausführungsform des erfindungsgemäßen Verfahrens erklärt, wobei die Korrektur nicht mehr für einzelne Abtastpunkte, sondern für Flächenelemente, bestehend aus benachbarten Abtastpunkten, durchgeführt ist.

Die Hierarchiestruktur entspricht im aufgeführten Beispiel in ihrer ersten Stufe den Flächenelementen und in ihrer zweiten Stufe dem vorliegenden Abtastbereich. Die Digitalstufen der Flächenelemente beziehen sich nicht mehr auf Matrixelemente ; man muß sie jetzt allgemeiner z. B. als Feldelemente bezeichnen.

Zunächst sind wiederum aus der Matrix der Abtastwerte 71 die Dichtestufenmatrix 72a und die Fehlermatrix 72b entstanden. In Feld 72c ist eine beispielhafte Zusammenfassung mehrerer Abtastpunkte zu Flächenelementen gezeigt, wobei ein Abtastpunkt dann mit einem oder mehreren ihm benachbarten zusammengefaßt ist, wenn entweder der Absolutfehler mindestens eines dieser Punkte größer als 4 bzw. kleiner als — 4 ist und durch die Zusammenfassung ein Akkumulationsfehler entsteht, der korrigierbar ist, d. h. außerhalb des Bereiches — 7, — 6, ... 7, 8 liegt, oder wenn die Absolutfehler der benachbarten Punkte kleiner als 4 bzw. größer als — 4 sind und durch Zusammenfassung der Akkumulationsfehler möglichst nahe 0 wird.

Durch diese Zusammenfassung werden Konturstücke aus den Abtastsignalen ausgefiltert, die jetzt trotz ihrer digitalen Reproduktion gegenüber den Abtastsignalen jeweils nur höchstens einen Digitalisierungsfehler, z. B. ± 1/2 sehr kleiner druckbarer Punkt, aufweisen.

So ergibt sich z. B. für das erste ermittelte Flächenelement, das aus 3 Abtastpunkten mit den Fehlern 5, 4, 7 zusammengesetzt ist, der Akkumulationsfehler 16, der gut korrigiert werden kann, wenn auf der Fläche der entsprechenden Abtastpunkte statt der berechneten 9 + 9 + 9 = 27 Punkte nur 26 Punkte gedruckt werden. Das Korrekturverfahren selbst ist daher gegenüber dem vorher aufgeführten unverändert.

Da die Korrektur allerdings nicht wie bisher für einzelne Abtastpunkte, sondern für die ermittelten Flächenelemente durchgeführt wird, muß in diesem Fall der Aufzeichnungsrechner, der sich gemäß Figur 1 an den erfindungsgemäßen Dichtestufenrechner anschließt, in der Lage sein, die berechnete Anzahl

6

druckender Punkte über mehrere Abtastpunkte zu verteilen (z. B. wie in der PCT-OS WO 81/00466, wobei die Flächenelemente den « Flächenstücken konstanter mittlerer Dichte » entsprechen).

Die Korrekturen der ersten Stufe sind in 73a ausgeführt. 73b zeigt die zugehörigen Akkumulationsfehler der ersten Stufe und daraus ergibt sich in nun bekannter Weise der Akkumulationsfehler der 2. Stufe 73c. der im gewählten Beispiel zu einem weiteren Korrekturschritt führt. so daß die Fehler 74 a-c entstehen. In einem zusätzlichen Verarbeitungsschritt kann aus Feld 74a auch Feld 75 gebildet werden, indem benachbarte Flächenelemente, die dieselbe Dichtestufe aufweisen, nochmals zusammengefaßt sind.

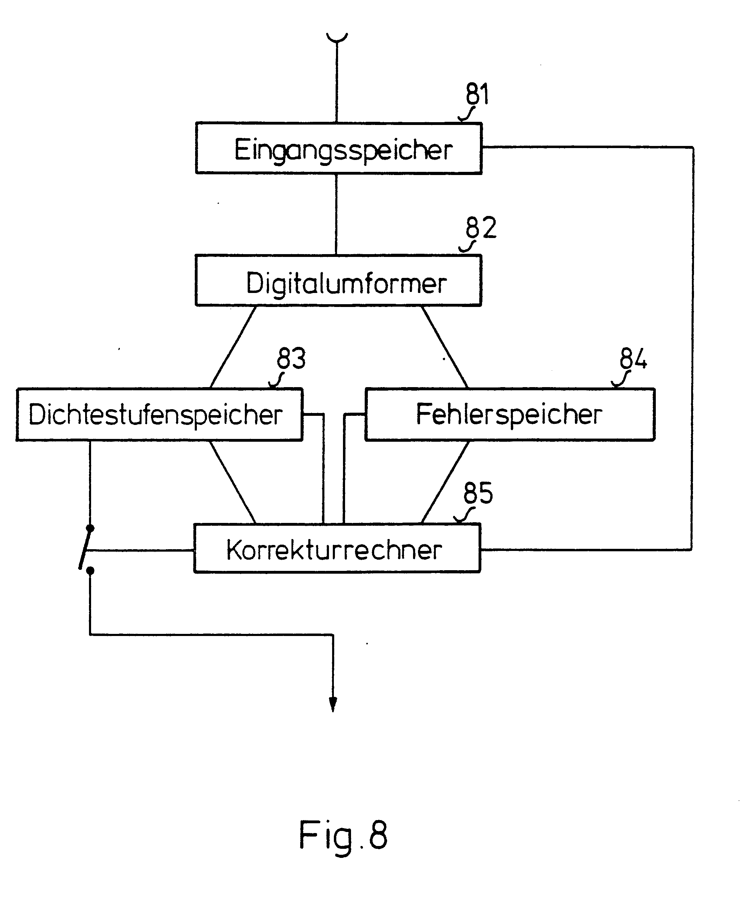

Figur 8 zeigt eine vorteilhafte Weiterbildung der erfindungsgemäßen Einrichtung. die gegenüber Figur 2 einen zusätzlichen Eingangsspeicher 81 enthält, in dem die Abtastsignale während der Filterung der Daten des jeweiligen Abtastbereiches erhalten bleiben. Von dort gelangen sie in den Digitalumformer 82 sowie in den Dichtestufenspeicher 83 und den Fehlerspeicher 84. Der Korrekturrechner 85 berechnet nun direkt aus den Daten des Eingangsspeichers 81 statt wie zuvor aus den Daten der Fehlermatrix die gewünschten Konturstücke, deren Dichtestufen dann mit Hilfe des erfindungsgemäßen Verfahrens unter Einbeziehung von Dichtestufenmatrix und Fehlermatrix korrigiert werden können.

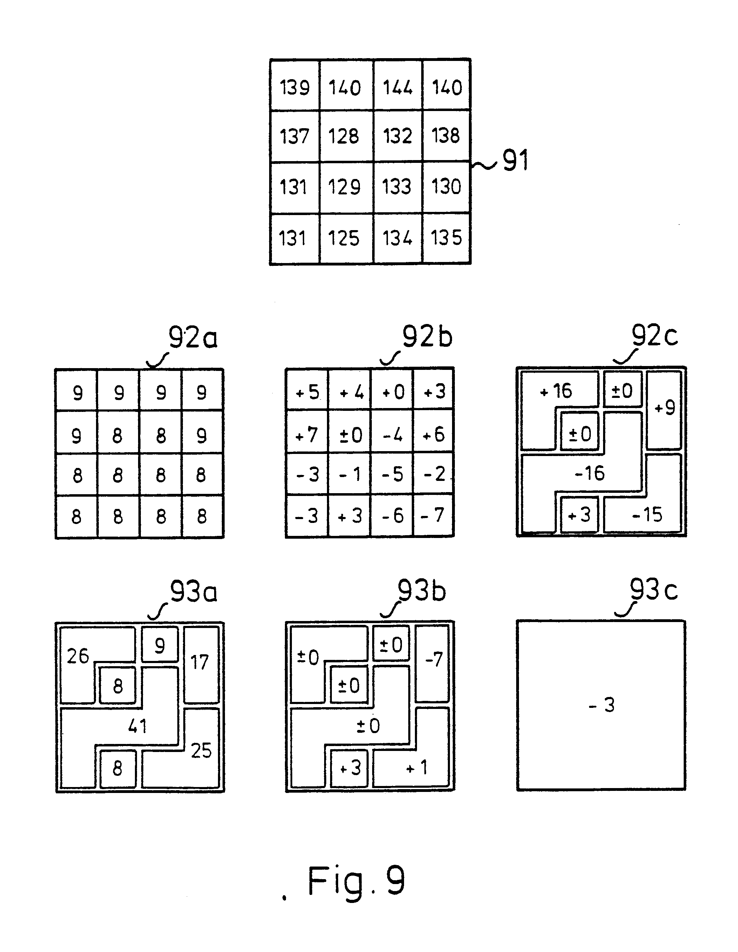

Figur 9 zeigt ein Anwendungsbeispiel, bei dem aus der Matrix der Abtastwerte 91 die den Abtastwerten nächstliegenden Digitalstufen berechnet und in der Dichtestufenmatrix 92a zusammengefaßt sind, wobei gleichzeitig die Fehlermatrix 92b gebildet wurde. 92c zeigt die den Konturstücken entsprechende Zusammenfassung von Abtastpunkten mit dem zugehörigen Akkumulationsfehler. Durch die entsprechenden Korrekturen entstehen daraus das Dichtestufenfeld 93a und das Akkumulationsfehlerfeld 93b und schließlich der Akkumulationsfehler 93c des Abtastbereiches.

Die Berechnung der Dichtestufen und der Absolutfehler ist bereits in der Beschreibung zu Figur 2 gezeigt. Die Zusammenfassung von Abtastpunkten zu Konturstücken in 92c ist dadurch erfolgt. daß die dem Abtastpunkt (z. B. der mit dem Abtastwert 139 in 71) benachbarten dann mit ihm zusammengefaßt wurden, wenn ihre Abtastwerte sich um nicht mehr als einen vorgegebenen Streubereich (z. B. ± 4) von dem des Abtastpunktes unterschieden, wobei die Zusammenfassung abgebrochen wurde. bevor der zugehörige Summenfehler größer als + 16 bzw. kleiner als — 16 wurde und wobei Abtastpunkte, die ohne Fehler (Absolurfehler 0) reproduzierbar waren, nicht zur Zusammenfassung benutzt wurden.

Die Akkumulationsfehler führen zur Korrektur der Dichtestufe jedes Konturstückes in 93a, was bereits in der Beschreibung zu Figur 7 erklärt ist. In 93b ist das zugehörige Akkumulationsfehlerfeld dargestellt, aus welchem der Akkumulationsfehler 93c der zweiten Stufe entsteht.

Zur Zusammenfassung von Abtastpunkten zu Konturstücken können natürlich auch andere Grenzen herangezogen werden, z. B. Streubereich ± 2, Summenfehler ± 32, oder die Grenzen « dynamisiert » werden. z. B. für zwei benachbarte Abtastpunkte maximaler Streubereich ± 8. für drei und vier benachbarte dann ± 16, für fünf bis acht benachbarte ± 24 usw. Diese Grenzen können insbesondere auch an jede einzelne Vorlage angepaßt werden, falls dieses z. B. aus ästhetischen oder wirtschaftlichen Gründen erwünscht ist.

In gleicher Weise kann die Ableitung der zur Korrektur erforderlichen Hierarchiestruktur variiert und jeder Vorlage angepaßt werden. Die Hierarchiestruktur kann beispielsweise auch in der ersten Stufe fest vorgegeben sein, wie in Fig. 4 gezeigt. und in der zweiten Stufe aus den Akkumulationsfehlern der ersten Stufe berechnet werden. Die « Dynamisierung » der Hierarchiestruktur ist ebenfalls möglich, indem z. B. die zur jeweiligen Akkumulationsfehlerbildung benutzte Anzahl von Abtast- oder Fehlerdaten stufenweise geändert wird.

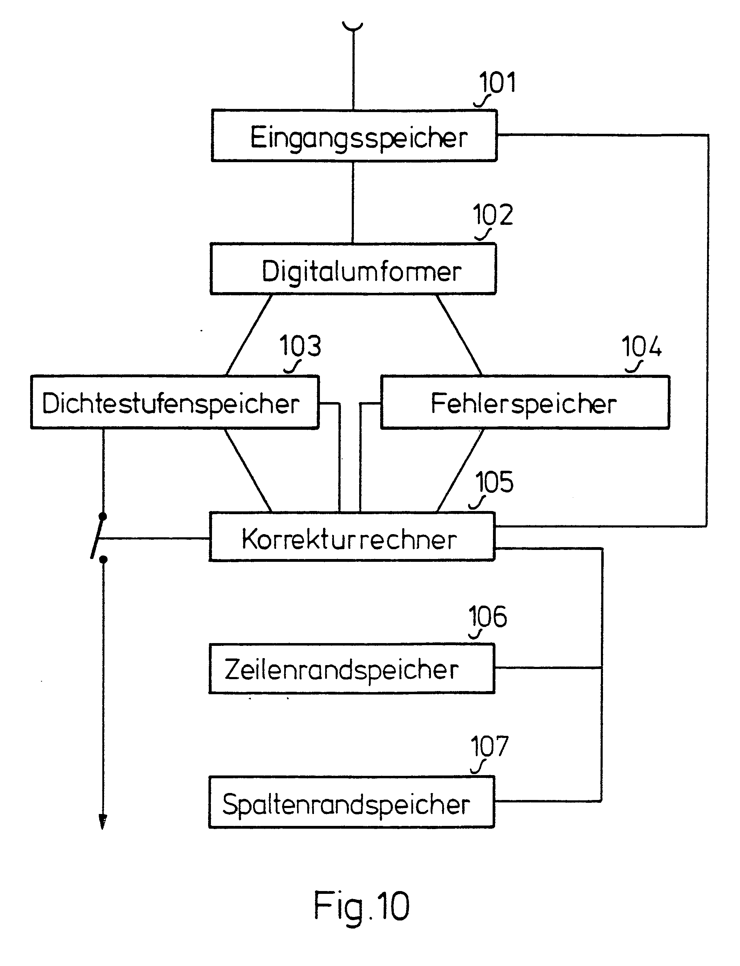

In Figur 10 ist eine weitere vorteilhafte Weiterbildung des erfindungsgemäßen Verfahrens dargestellt, die zusätzliche Speicher enthält, welche die für die Randzonen des Abtastbereiches zunächst berechneten Dichtestufen speichern können. damit diese nochmals in die Berechnung für die benachbarten Abtastbereiche mit einbezogen werden können. Ihre Akkumulationsfehler lassen sich durch Zusammenfassung mit Abtastpunkten der benachbarten Abtastbereiche gegebenenfalls weiter verkleinern. So kann z. B. der Zeilenrandspeicher 106 die jeweils untere(n) Zeile(n) des Abtastspeichers und der Spaltenrandspeicher 107 z. B. die jeweils rechte(n) Spalte(n) speichern. Dadurch ist sichergestellt. daß die Struktur der Abtastbereiche sich nicht störend bemerkbar machen kann.

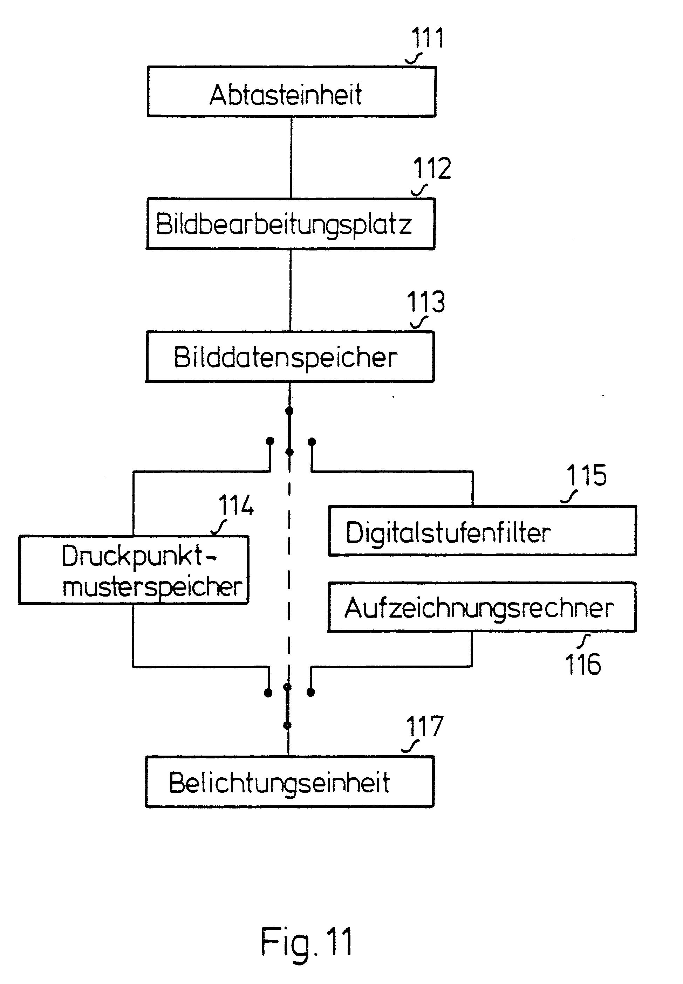

Figur 11 zeigt eine beispielhafte Möglichkeit zur Einordnung der erfindungsgemäßen Einrichtung in den Reproduktionsprozeß, die gegenüber der in Figur 1 beschriebenen den Vorteil hat. daß sie sehr einfach in den heute üblichen Prozeßablauf eingegliedert werden kann. Hierbei werden die bei der Abtastung 111 gewonnenen Dichtewerte zunächst in bekannter Weise bearbeitet (112), d. h. gefiltert und in der Gradation verändert, gegebenenfalls auch durch andere Bilddaten ergänzt und ersetzt, und nach ihrer Bearbeitung (z. B. in dem o. a. System CHROMACOM) gespeichert (113). Der Bilddatenspeicher 113 enthält in diesem Fall die Daten der zu reproduzierenden Vorlage (nach Retusche und Montage), so daß erst anschließend die Entscheidung zu treffen ist, ob die Reproduktion nun in analoger Form, z. B. mit Hilfe eines Druckmusterspeichers 114, oder in digitaler Form. z. B. mit dem erfindungsgemäßen Digitalstufenfilter 115 und daran anschließend z. B. der aus PCT-OS W081/00466 bekannten Einrichtung 116. erfolgen soll, die hier als Aufzeichnungsrechner bezeichnet ist. Anschließend gelangen die Bilddaten zur Belichtungseinheit 117.

Die Bildoriginale haben in der Regel einen ihnen eigenen Farbcharakter, der subjektiv empfunden wird und dadurch entsteht. daß im Bildoriginal auftretende « Farbtöne » sich wechselseitig zu einem « Farbklang » ergänzen. Dieser Farbklang kann etwa als Ruhe oder als Dynamik oder als Spannung bezeichnet werden, und es ist häufig für die Reproduktion sehr wichtig, diese Eindrücke zu verstärken bzw. sie trotz des relativ geringen reproduzierbaren Farbraumes zu erhalten. Zu diesem Zweck können z. B. zwei Farbauszüge, deren Mischfarben einen ruhigen Verlauf eines Bildoriginals aufweisen, im herkömmlichen Reproduktionsverfahren hergestellt werden, während der dritte und eventuell ein vierter Farbauszug, deren Teilfarben für den Detailreichtum des Bildoriginals ausschlaggebend sind, im digitalen Reproduktionsverfahren entstehen können. Zugleich können die Rasterlinienzahlen der zuerst genannten Farbauszüge erhöht und ihre Winkelung im Bereich von 45° gewählt werden, so daß die Reproduktion nicht mehr als Rasterbild wahrgenommen werden kann.

Die Baugruppen 114, 115 und 116 können beispielsweise ein eigenständiges Teilsystem bilden. Die Baugruppen 114, 115 und 116 können auch mit der Belichtungseinheit 117 zusammengefaßt sein. Der Bilddatenspeicher 113 kann auch direkt mit der Belichtungseinheit verbunden sein oder mit den Baugruppen 114, 115 und 116 zusammengefaßt werden. Die Baugruppen 114, 115 und 116 können auch direkt mit dem Bildbearbeitungsplatz 112 verbunden sein oder darin integriert werden. Durch entsprechende Steuerbefehle vom Bildbearbeitungsplatz, die ein Operateur oder ein ihn unterstützendes Verarbeitungsprogramm geben können, ist in dieser beispielhaften Anordnung sogar innerhalb eines Farbauszuges das Reproduktionsverfahren zwischen herkommlich und digital beliebig umschaltbar.

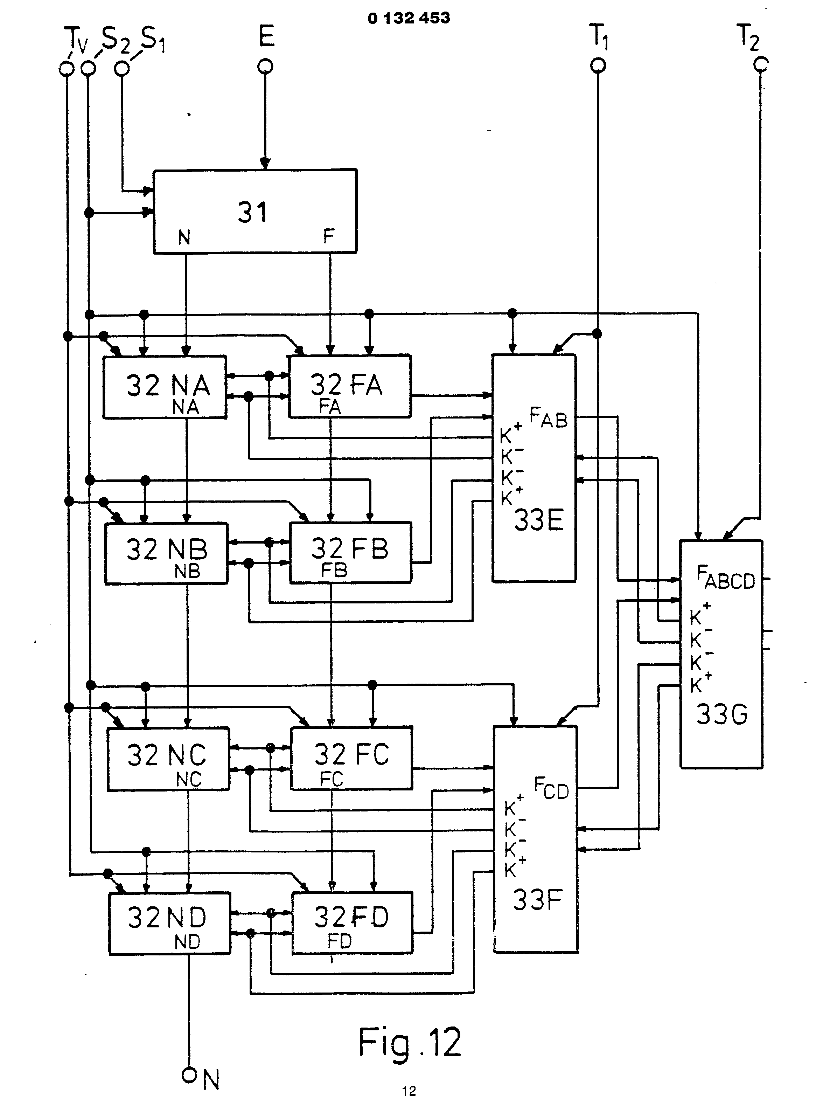

Figur 12 zeigt das Blockschaltbild einer beispielhaften Ausführungsform der erfindungsgemäßen Einrichtung. Das Eingangssignal E wird im Digitalumformer 31 in das Nutzsignal N und das Fehlersignal F aufgeteilt. Die Auflösung des Nutzsignals ist durch die Steuersignale $S_1$ und $S_2$ bestimmt.

Nutz- und Fehlersignal werden an die Zwischenspeichereinrichtungen 32 xy übergeben, wobei die Übergabe mittels des Taktsignals $T_v$ gesteuert ist. Die beispielhafte Ausführungsform der erfindungsgemäßen Einrichtung weist Zwischenspeichereinrichtungen für das Nutzsignal 32 Ny und Zwischenspeichereinrichtungen für das Fehlersignal 32 Fy auf und umfaßt vier Verarbeitungsschritte A, B, C und D mit den zugehörigen Zwischenspeichereinrichtungen 32 xA bis 32 xD. Die Zwischenspeichereinrichtungen 32 xy weisen Eingabemittel für die Korrektursignale $K^+$ und $K^-$ auf, welche die Anhebung bzw. die Absenkung des Nutz- und Fehlersignals bewirken. Der Betrag von Anhebung und Absenkung ist mit dem Steuersignal $S_2$ gekennzeichnet. Die Zwischenspeichereinrichtungen 32 Fy für die Fehlersignale sind mit den Korrekturrechnern 33 z verbunden, in welchen die Korrektursignale $K^+$ und $K^-$ gebildet werden.

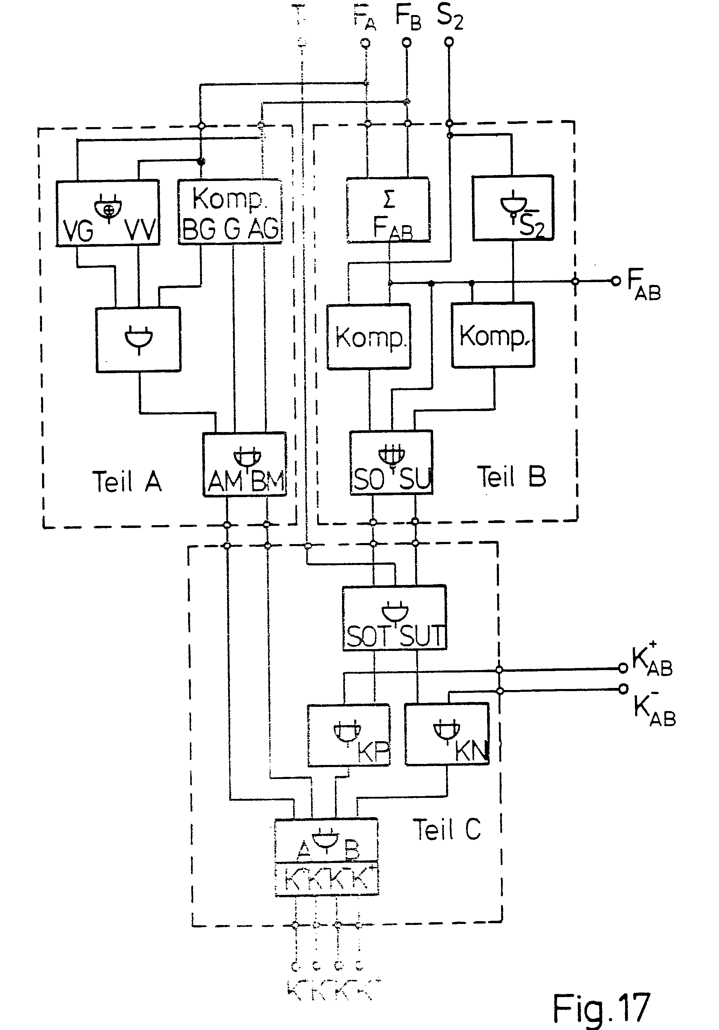

Die Korrekturrechner 33 z werden durch die Taktsignale $T_1$ und $T_2$ gesteuert, wobei der Index 1 die untergeordnete und der Index 2 die übergeordnete Korrekturstufe charakterisiert. Dem Korrekturrechner 33 E werden die Fehlersignale $F_A$ und $F_B$ zugeführt, sie werden im Korrekturrechner aufsummiert, und das Summenfehlersignal $F_{AB}$ wird an den Korrekturrechner 33 G weitergeleitet. Der Korrekturrechner 33 E weist außerdem Eingabemittel auf, um die Korrektursignale $K^+$ und $K^-$ vom Korrekturrechner 33 G zu verarbeiten. Das Summenfehlersignal $F_{AB}$ wird zusätzlich im Korrekturrechner 33 E weiterverarbeitet, indem es mit einer oberen und mit einer unteren Fehlerschwelle verglichen wird, welche beide aus dem Steuersignal $S_2$ gebildet werden (vgl. spätere Fig. 17). Im Korrekturrechner 33 E werden aus den Fehlersignalen $F_A$ und $F_B$, aus den Korrektursignalen $K^+$ und $K^-$ des Korrekturrechners 33 G und aus dem Steuersignal $S_2$ die Korrektursignale $K^+$ und $K^-$ für die Zwischenspeichereinrichtungen 32 xA und 32 xB berechnet. In gleicher Weise entstehen die entsprechenden Korrektursignale für die Zwischenspeichereinrichtungen 32 xC und 32 xD im Korrekturrechner 33 F.

Der Korrekturrechner 33 G unterscheidet sich von den vorgenannten Korrekturrechnern lediglich dadurch, daß erstens statt der Fehlersignale, z. B. $F_A$ und $F_B$, die Summenfehlersignale $F_{AB}$ und $F_{CD}$ quasi als Teilsummen eingegeben werden und daß ihm zweitens kein weiterer Korrekturrechner übergeordnet ist, weshalb das aus $F_{AB}$ und $F_{CD}$ gebildete Summenfehlersignal $F_{ABCD}$ nur intern benutzt und nicht weitergeleitet wird sowie umgekehrt kein Korrektursignal $K^+$ und $K^-$ eingegeben wird.

Das Ausgangssignal der beschriebenen beispielhaften Ausführungsform der erfindungsgemäßen Einrichtung ist das solchermaßen gefilterte Nutzsignal N.

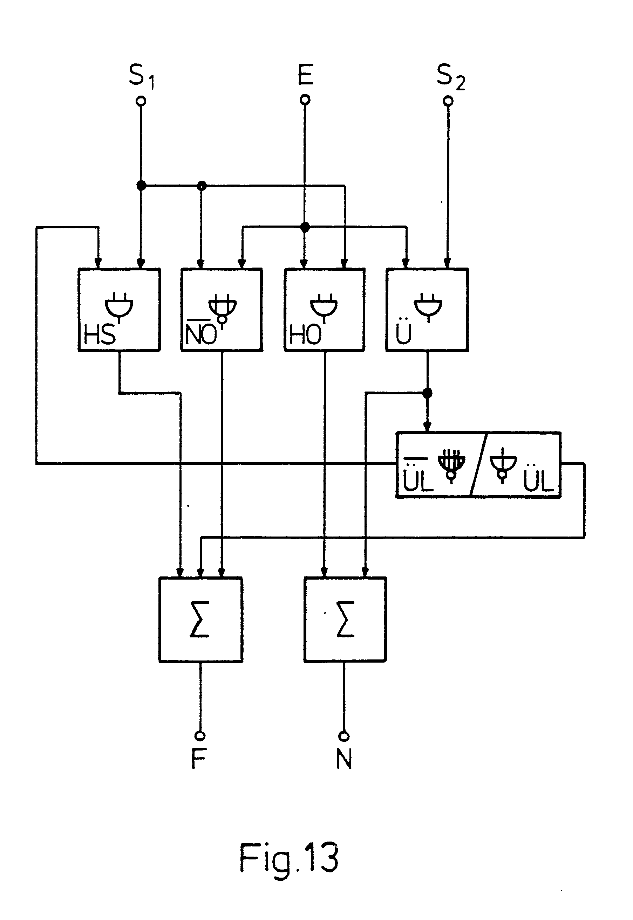

Figur 13 zeigt eine beispielhafte Ausführungsform des Digitalumformers 31 in Fig. 12.

Vom Eingangssignal E werden die Bits niederer Ordnung durch das Steuersignal $S_1$ mittels einer UND-Verknüpfung unterdrückt, so daß allein das Signal HO übrigbleibt. Im Steuersignal $S_1$ sind zu diesem Zweck die Bits hoher Ordnung, aus denen das Nutzsignal bestehen soll, mit L und die zur Korrektur benutzten Bits mit O gekennzeichnet. Im Steuersignal $S_2$ ist nur ein Bit mit L gekennzeichnet, welches im gewählten Beispiel dem niedrigsten Bit des Nutzsignals entspricht, während alle übrigen mit O gekennzeichnet sind. Aus der UND-Verknüpfung von Steuersignal $S_2$ und Eingangssignal E entsteht der Übertrag U. Das Nutzsignal N entsteht durch Addition des Übertrags Ü und des Signals HO.

Weiterhin werden vom Eingangssignal E die Bits niederer Ordnung durch das Steuersignal $S_1$ mittels einer NOR-Verknüpfung invertiert, so daß das Signal NO entsteht. Das Hilfssignal HS entsteht aus der UND-Verknüpfung des inversen logischen Übertragssignals ÜL mit dem Steuersignal $S_1$, so daß in ihm die Bits hoher Ordnung entsprechend dem Steuersignal $S_1$ z. B. dann mit L gekennzeichnet sind, wenn das Übertragssignal Ü kein einziges L enthält. Das inverse logische Hilfssignal ÜL entsteht aus dem Übertragssignal Ü mittels einer Mehrfach-NOR-Verknüpfung, eine weitere NOR-Verknüpfung führt zur Inversion von Ü und ergibt ÜL. Durch Addition von Hilfssignal HS, dem logischen Übertragssignal ÜL und dem Signal NO wird das Fehlersignal F gebildet.

Das Fehlersignal F gibt an, um welchen Wert das Eingangssignal E durch das Abtrennen des Nutzsignals N verändert worden ist. Ein negatives Fehlersignal F wird durch die aufgeführte Schaltung beispielhaft im sogenannten Einer-Komplement dargestellt.

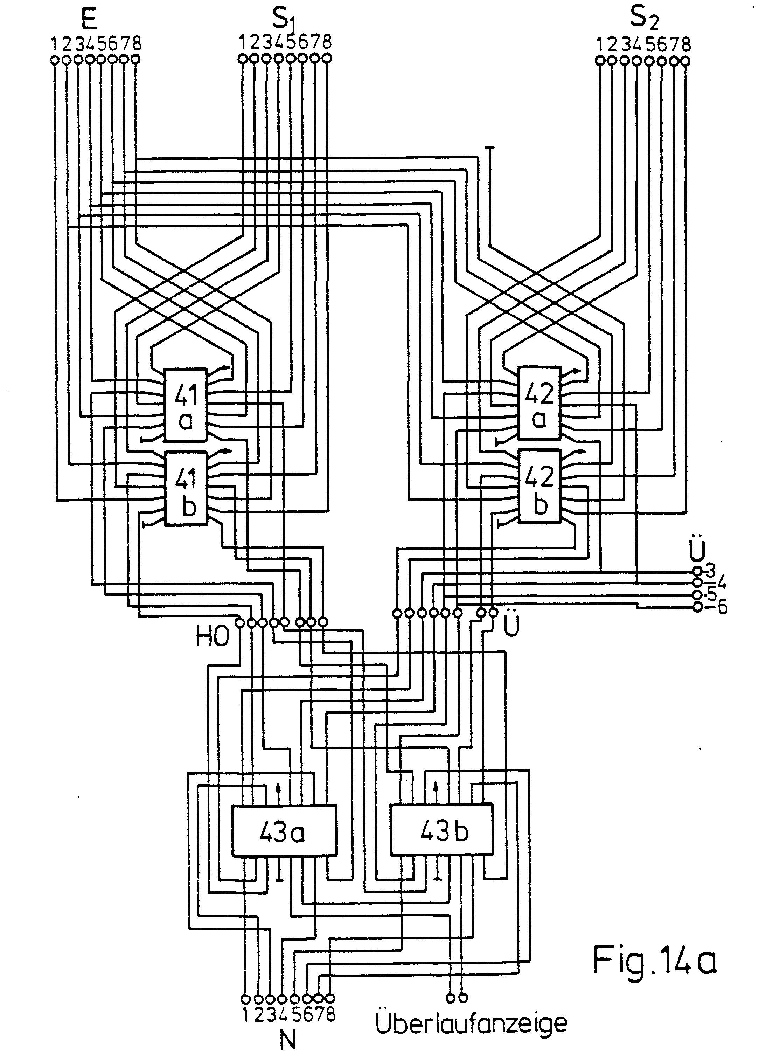

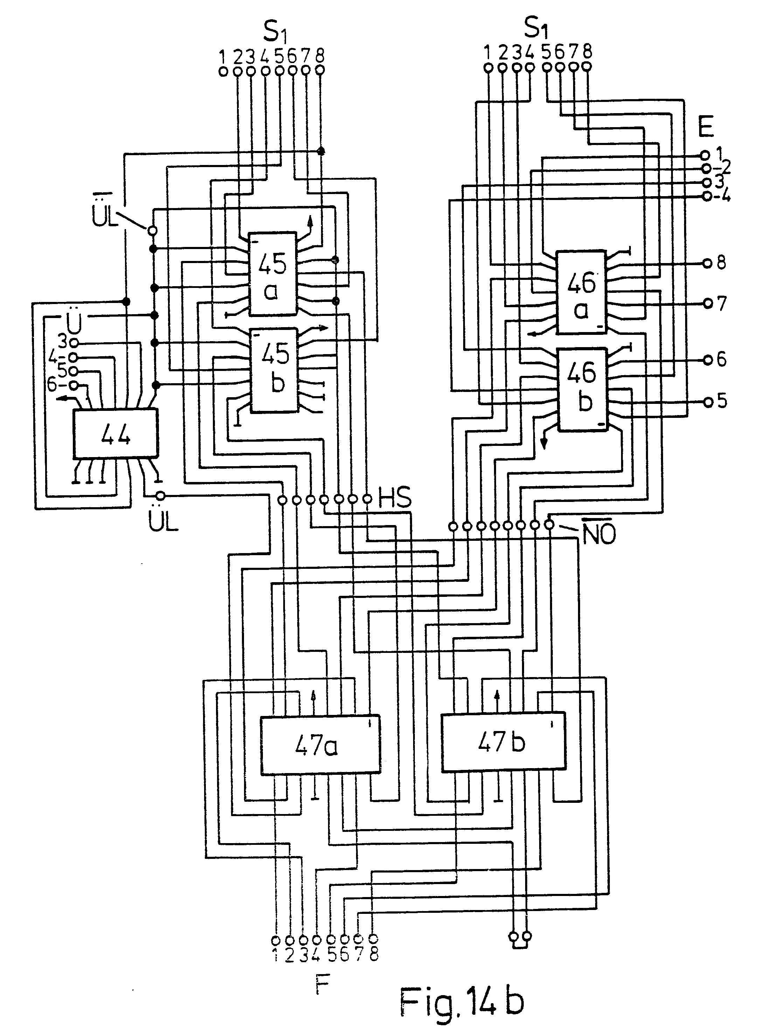

Fig. 14a zeigt eine beispielhafte Ausführungsform des Digitalumformers gemäß Fig. 13, wobei das Eingangssignal E und die beiden Steuersignale $S_1$ und $S_2$ jeweils 8 Bit aufweisen. Die hier und im folgenden aufgeführten integrierten Schaltkreise sind entnommen aus « The TTL Data Book for Design Engineers », Texas Instruments Europe, Fifth European Edition 1982. Sie sind im Fachhandel erhältlich, ebenso sind Schaltkreise anderer Hersteller mit vergleichbaren Eigenschaften allgemein zugänglich.

Figur 5a zeigt die Bildung des Nutzsignals N aus dem Eingangssignal E und den Steuersignalen $S_1$ und $S_2$. Hierbei sind die UND-Verknüpfungen, aus welchen das Signal HO entsteht (IC 41 a und b), ebenso wie die UND-Verknüpfungen, aus denen das Übertragssignal Ü gebildet wird (IC 42 a und b) aus jeweils zwei SN47LS08 aufgebaut. Als Addierer, in dem HO und Ü zum Nutzsignal N addiert werden (IC 43 a und b) dienen zwei SN74LS83A.

Die Berechnung des Fehlersignals F ist in Figur 5b dargestellt. Das Invertieren der Bits niederer Ordnung NO vom Eingangssignal E mittels Steuersignal $S_1$ ist durch zwei SN75LS01 (IC 46 a und b) realisiert. Zur Bildung des Hilfssignals HS aus dem Steuersignal $S_1$ und dem inversen logischen Übertragssignal ÜL dienen wieder zwei SN74LS08 (IC 45 a und b). Das inverse logische Übertragssignal ÜL wird in SN74LS40 (IC 44) aus den mittleren Bits des Übertragssignals Ü gebildet und invertiert zu ÜL. Die Addition von HS und NO erfolgt mittels zweier SN74LS83A (IC 47 a und b).

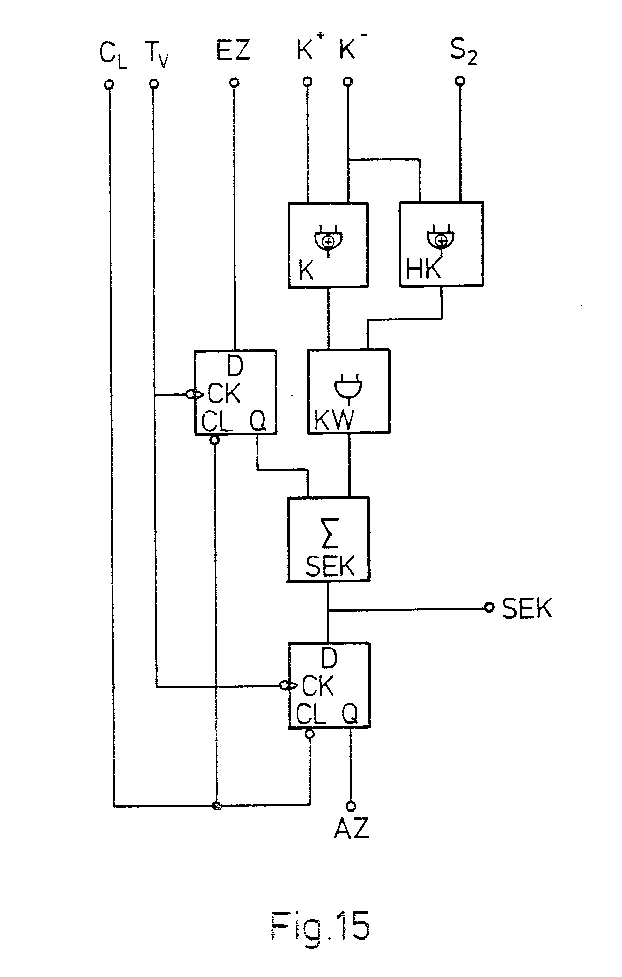

Ein Ausführungsbeispiel für die Zwischenspeichereinrichtung 32 in Figur 12 mit Eingabemittel zur Korrektur ist in Figur 15 dargestellt. Das Eingangssignal EZ der Zwischenspeichereinrichtung wird in dem ersten Speicherelement gespeichert und durch das Taktsignal $T_V$ gesteuert weitergeleitet. Von dort gelangt es direkt zu dem Addierer, wo das Korrektursignal KW zum Eingangssignal EZ addiert wird. Vom Addierer gelangt die Summe SEK aus Eingangssignal und Korrekturwert zu dem zweiten Speicherelement und wird zusätzlich als Eingangssignal für den Korrekturrechner zur Verfügung gestellt. Durch das Taktsignal $T_V$ wird das Summensignal SEK als Ausgangssignal AZ der zweiten Zwischenspeichereinrichtung weitergegeben. Beide Speichereinrichtungen weisen zusätzlich Eingabemittel zum Löschen des Speicherinhalts auf. Von dieser Möglichkeit wird in der angegebenen Ausführungsform der erfindungsgemäßen Einrichtung kein Gebrauch gemacht. Das Signal CL ist daher nicht weiterverbunden.

Der Korrekturwert KW wird aus dem Steuersignal $S_2$ und den Korrektursignalen $K^-$ und $K^-$ berechnet. Zu diesem Zweck wird mittels einer ersten EXOR-Verknüpfung aus dem Steuersignal $S_2$ und dem Korrektursignal $K^-$ das Hilfssteuersignal HK gebildet. Das Steuersignal $S_2$ wird daher invertiert, falls das Korrektursignal $K^-$ gerade L ist, bzw. nicht invertiert, falls es O ist. Eine zweite EXOR-Verknüpfung zwischen den beiden Korrektursignalen $K^-$ und $K^-$ dient zur Überprüfung, ob eine Korrektur ausgeführt wird (K = L). Dies geschieht, wenn nur eines der beiden Korrektursignale L ist. Der Korrekturwert KW ergibt sich aus der UND-Verknüpfung zwischen dem Korrekturkontrollsignal K und dem Hilfssteuersignal HK.

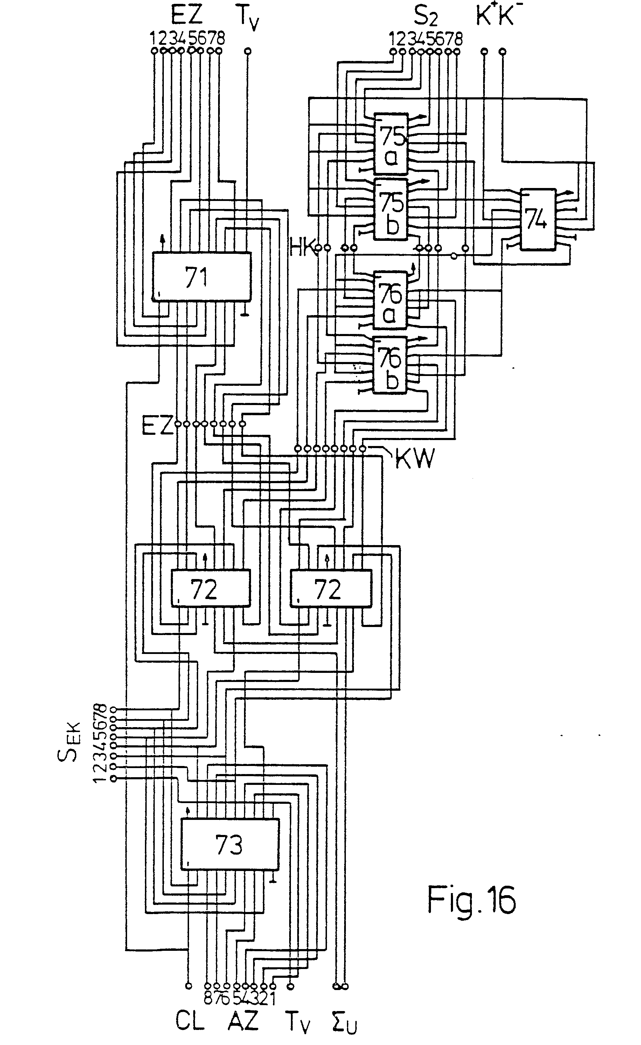

In Figur 16 ist ein beispielhafter Schaltungsaufbau für die Zwischenspeichereinrichtung gemäß Figur 15 mit TTL-Schaltkreisen, die im Fachhandel erhältlich sind, ausgeführt. Als Speicherelement für das Eingangssignal und das Ausgangssignal dient jeweils ein SN54LS273 (IC 71 und IC 73). Der Addierer, in dem das Signal SEK als Eingangssignal EZ und Korrekturwert KW gebildet wird, besteht aus zwei SN74LS83 (IC 72 a und b). Die EXOR-Verknüpfung von Steuersignal $S_2$ und Korrektursignal $K^-$ erfolgt durch zwei SN74LS86 (IC 75 a und b), ein weiterer SN74LS86 (IC 74) dient zur EXOR-Verknüpfung der beiden Korrektursignale $K^-$ und $K^-$ sowie als Impedanzwandler. Die UND-Verknüpfung, bestehend aus zwei SN74LS08 (IC 76 a und b), dient zur Berechnung des Korrekturwertes KW aus dem Korrekturkontrollsignal K und dem Hilfssteuersignal HK.

Ein beispielhaftes Aufbau-Prinzip-Schaltbild der Korrektureinrichtung 33 in Figur 12 ist in Figur 17 dargestellt. Die Korrektureinrichtung ist in die Teile A, B und C untergliedert.

A : In Teil A wird berechnet, ob das Fehlersignal A das Fehlermaximum aufweist (AM = L) oder ob das Fehlersignal B größer ist (BM = L). Zu diesem Zweck werden die Fehlersignale $F_A$ und $F_B$ in einem Komparator miteinander verglichen. Der Komparator zeigt an, ob das Fehlersignal A größer als das Fehlersignal B ist (AG = L), ob sie gleich sind (G = L) oder ob Fehlersignal B am größten ist (BG = L). Da die ausgeführten Schaltungsbeispiele zur Darstellung negativer Zahlen das sog. Einer-Komplement (siehe Fig. 13) benutzen, muß zusätzlich überprüft werden, ob das im Komparator berechnete Maximum auch das tatsächliche Maximum ist. Diese Überprüfung kann z. B. dadurch geschehen, daß zunächst mittels einer EXOR-Verknüpfung von den Vorzeichenbits der beiden Fehlersignale $F_A$ und $F_B$ bestimmt wird, ob die Vorzeichen gleich sind (VG = L) oder ob sie verschieden sind (VV = L), und daß anschließend mit UND- und ODER-Verknüpfungen, die in der Abbildung nur symbolisch dargestellt sind, die tatsächlichen Maxima berechnet werden. So wird das Fehlersignal A als Maximum mit AM = L gekennzeichnet, wenn entweder AG oder G ein L aufweisen und VG ebenfalls L ist oder wenn BG und VV ein L aufweisen. Umgekehrt ist das Fehlersignal B größer und wird mit BM = L gekennzeichnet, wenn entweder AG oder G und VV oder BG und VG den Pegel L haben.

B : In Teil B wird zunächst das Summenfehlersignal $F_{AB}$ gebildet und anschließend überprüft, ob es die obere Schwelle überschreitet (SO = L) und ob es die untere Schwelle unterschreitet (SU = L).

# 0 132 453

Das Summenfehlersignal $F_{AB}$ wird nicht nur intern benutzt, sondern auch als ein Ausgangssignal des Korrekturrechners zur Verfügung gestellt, so daß es in einen Korrekturrechner höherer Ordnung als Eingangs-Fehler-Signal eingegeben werden kann.

Das Steuersignal $S_2$ dient direkt als oberes Schwellensignal, durch seine Inversion entsteht das untere Schwellensignal $S_2$. Das Summenfehlersignal wird in dem einen Komparator mit dem oberen Schwellensignal $S_2$ und in dem anderen Komparator mit dem unteren Schwellensignal $S_2$ verglichen. Bedingt durch die o. e. Darstellung der negativen Zahlen im Einer-Komplement müssen abschließend noch die Bedingungen für das Überschreiten der Schwellensignale unter Berücksichtigung des Vorzeichens des Summenfehlersignals überprüft werden. Dies ist mittels mehrerer NOR-Verknüpfungen möglich. Die obere Schwelle ist z. B. dann uberschritten (SO = L), wenn das Vorzeichen des Summenfehlersignals nicht negativ ist und das Summenfehlersignal in den Komparatoren weder kleiner als das obere Schwellensignal noch kleiner als das untere Schwellensignal beurteilt wird. Bei Überschreiten des unteren Schwellensignals wird unter den entsprechenden Bedingungen SU = L.

C : Teil C dient zur Berechnung der Korrektursignale $K^-$ und $K^-$ für die zugehörigen Zwischenspeichereinrichtungen, z. B. 32 NA und 32 FA sowie 32 NB und 32 FB in Fig. 12. Dies erfolgt, indem zunächst mittels einer UND-Verknüpfung von den Schwellensignalen SO und SU mit dem Taktsignal $T_1$ die Schwellensignale SOT und SUT unterdrückt werden, wenn kein Taktsignal ($T_1$ = O) anliegt. Andernfalls ($T_1$ = L) werden diese an die folgenden ODER-Verknüpfungen weitergegeben, so daß SOT = SO und SUT = SU ist. Die ODER-Verknüpfungen dienen zum Berücksichtigen beider Möglichkeiten ($T_1$ = O und $T_1$ = L), wobei die Korrektursignale $K^-_{AB}$ und $K^-_{AB}$ von einem übergeordneten Korrekturelement eingegeben werden können und dadurch die Signale SOT und SUT ersetzen, falls diese unterdrückt sind ($T_1$ = O). Das Signal KP ist L, wenn eine Korrektur im positiven Sinn erfolgen soll. Dementsprechend ist KN = L, wenn die Korrektur im negativen Sinn erfolgt. Mittels weiterer UND-Verknüpfungen werden aus den Signalen KP und KN sowie aus den Signalen AM und BM die Korrektursignal, z. B. $K^-$ und $K^-$ für die Zwischenspeichereinrichtungen 32 NA und 32 FA sowie die entsprechenden $K^-$ und $K^-$ für die Zwischenspeichereinrichtungen 32 NB und 32 FB, berechnet. So wird z. B. für die Baugruppen 32 NB und 32 FB das Korrektursignal $K^-$ = L, wenn KN und AM ein L aufweisen.

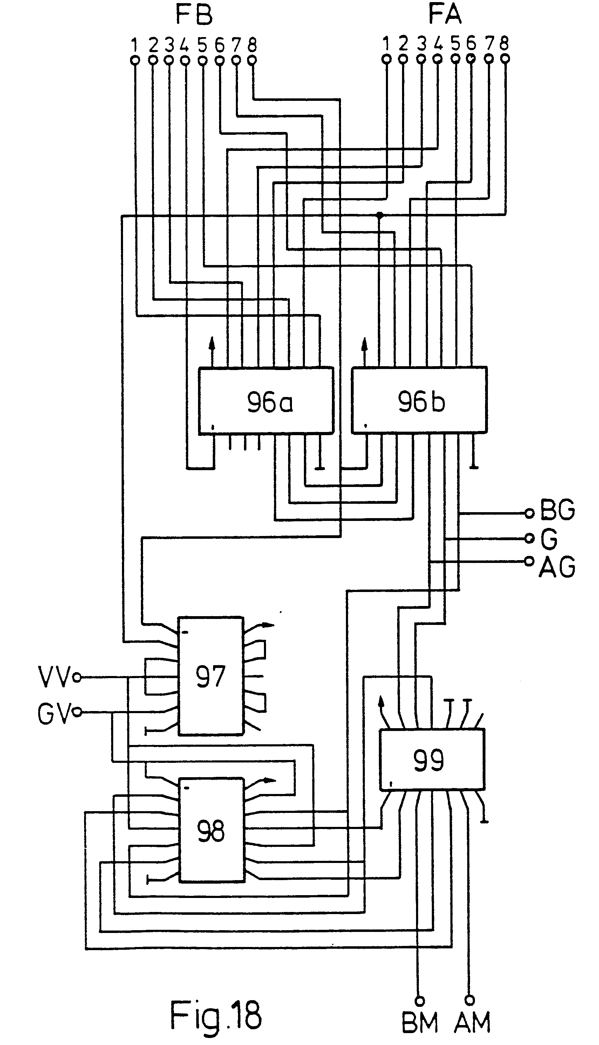

In Figur 18 ist der Teil A des Korrekturrechners gemäß Figur 17 beispielhaft ausgeführt. Der Komparator (IC 96 a und b) zum Vergleich der Fehlersignale $F_A$ und $F_B$ besteht aus zwei SN74LS85. Die Signale VG und VV des Vorzeichenvergleichs werden mittels zweier EXOR-Gatter von SN74LS86 (IC 97) erzeugt, die übrigen TTL-Schaltkreise weisen die UND-Gatter SN74LS08 (IC 98) und die ODER-Gatter SN74LS32 (IC 99) auf, mittels welchen die Signale AM und BM entsprechend den zuvor beschriebenen Gleichungen berechnet werden.

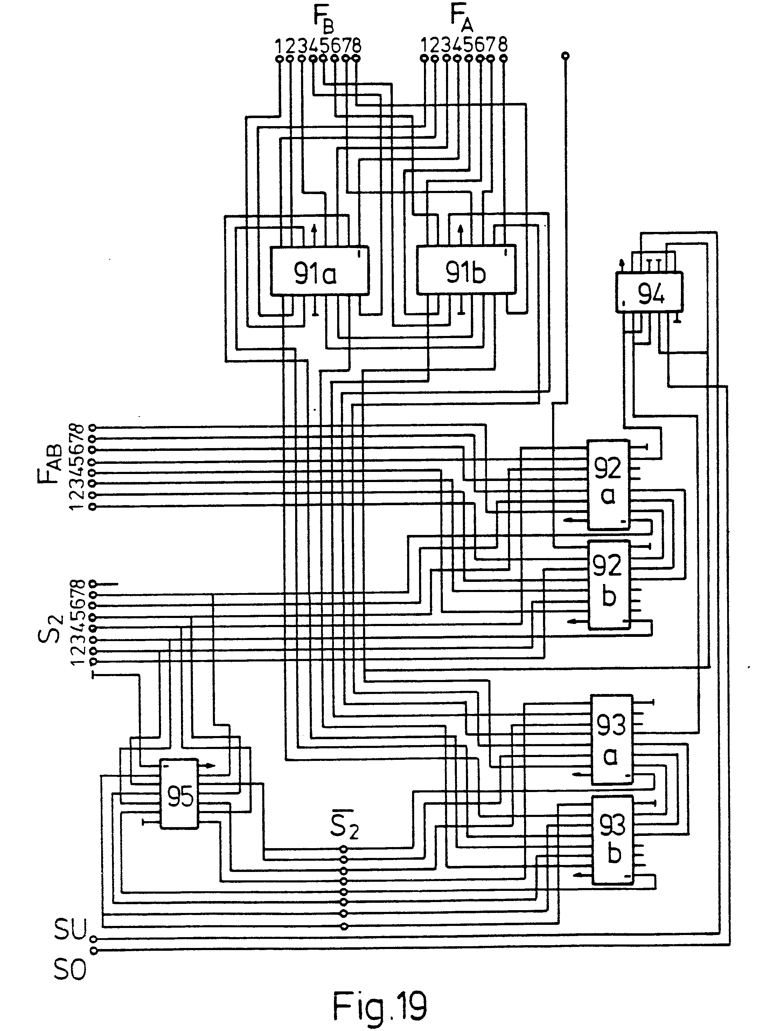

Teil B des Korrekturrechners gemäß Figur 17 ist in Fig. 19 beispielhaft ausgeführt. Die Fehlersignale $F_A$ und $F_B$ werden mittels zweier SN74LS83 addiert (IC 91 a und b), der Summenfehler $F_{AB}$ wird an die beiden Komparatoren übergeben und als Ausgangssignal für übergeordnete Korrekturrechner zur Verfügung gestellt. Die beiden Komparatoren (IC 92 a und b sowie IC 93 a und b) bestehen aus je zwei SN74LS85. Das Invertieren (IC 95) des Steuersignals $S_2$ geschieht mittels des TTL-Schaltkreises SN74LS04. Die Bedingungen für das Überschreiten der oberen und der unteren Fehlerschwelle werden in SN74LS27 (IC 94) überprüft, Don welchem die Signale SO und SU für den Teil C dieses Korrekturrechners zur Verfügung gestellt werden.

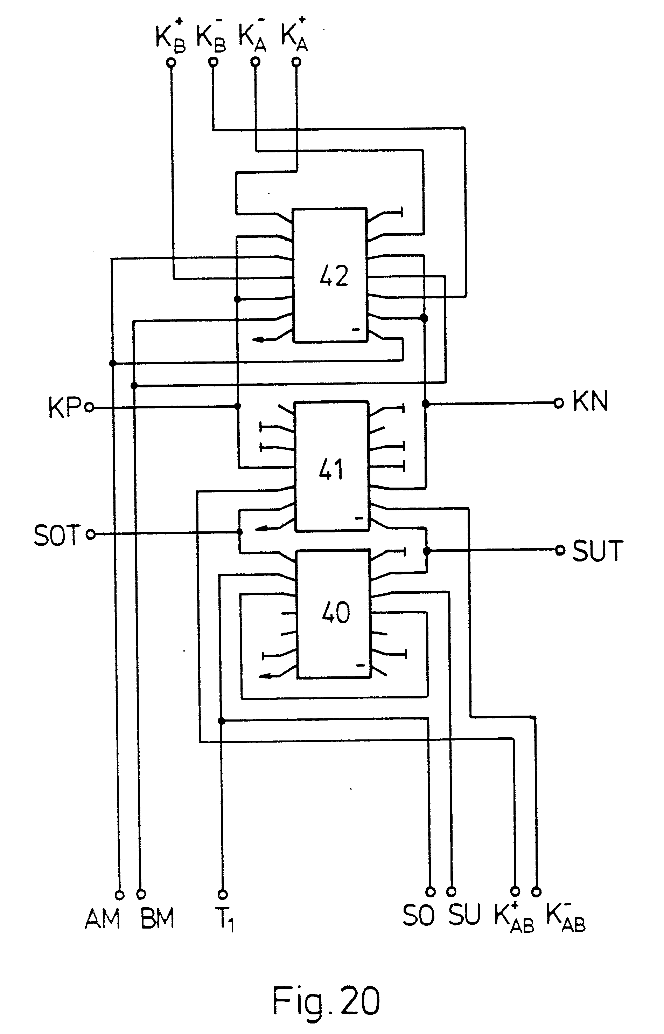

Figur 20 zeigt schließlich die beispielhafte Ausfürung von Teil C des Korrekturrechners gemäß Fig. 17.

Die Signale SU und SO von Teil B des Korrekturrechners werden in SN74LS08 (IC 40) mit dem Taktsignal $T_1$ verknüpft, wodurch die Signale SUT und SOT entstehen. Diese sind in SN74LS32 (IC 41) mit den Korrektursignalen $K^-_{AB}$ und $K^-_{AB}$, die von einem übergeordneten Korrekturrechner, falls dieser existiert, entnommen worden, so daß die Signale KN und KP entstehen. Diese sind in dem abschließenden SN74LS08 (IC 42) mit den Signalen AM und BM verknüpft, und dadurch erhält man als Ausgangssignal von Teil C des Korrekturrechners die Korrektursignale $K^-$ und $K^-$ für die Verarbeitungsstufen A und B.

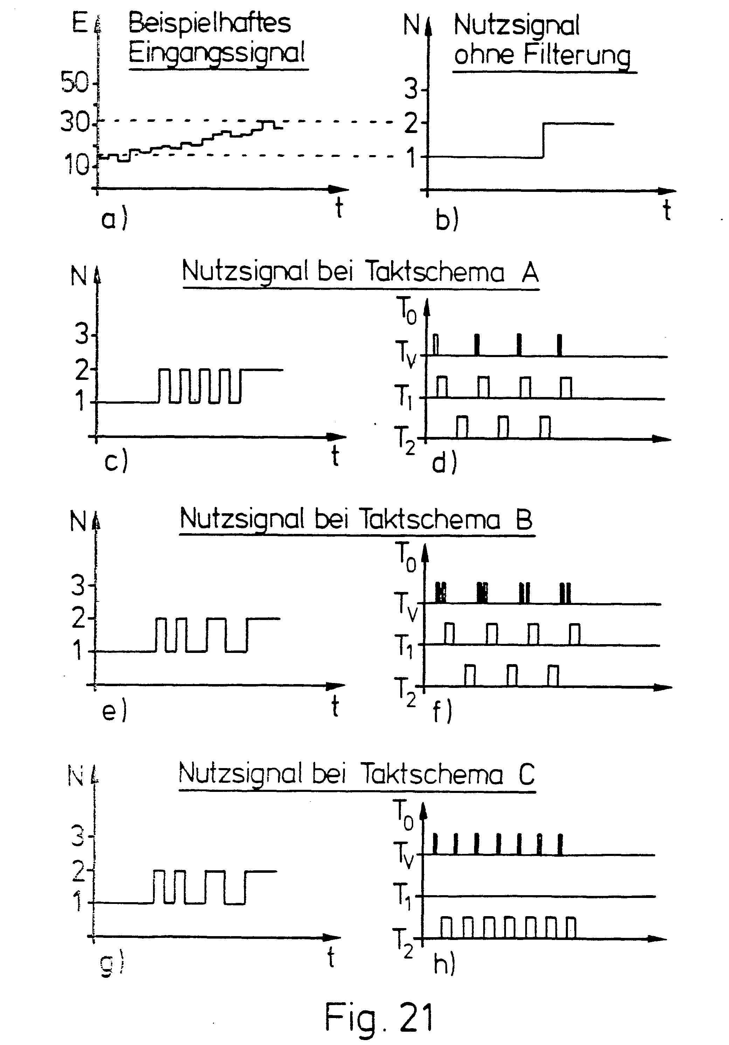

Figur 21 zeigt ein Anwendungsbeispiel der erfindungsgemäßen Einrichtung. Ein beispielhaftes Eingangssignal mit 8 bit-Abstufung würde bei Abtrennung der vier niederwertigen Bits das oben rechts dargestellte Nutzsignal ohne Filterung ergeben. Dieses Nutzsignal weicht infolge der nun recht groben Signalabstufung, die für das Nutzsignal lediglich 4 Bit beträgt, ganz erheblich vom Eingangssignal ab, so daß insbesondere der Übergangsbereich zwischen den Digitalstufen des Nutzsignals vollständig verschwindet. Dieser unbefriedigende Zustand könnte nur dann gemildert werden, wenn das Eingangssignal so stark verrauscht wäre, daß das Nutzsignal in dem angesprochenen Übergangsbereich zufällig von der einen zur anderen Digitalstufe springen würde, wodurch eine Pulsfrequenzmodulation entstehen würde.

Das erfindungsgemäße Filterverfahren führt zu der gewünschten Pulsfrequenzmodulation in dem angesprochenen Übergangsbereich und zeichnet sich dadurch aus, daß diese Pulsfrequenzmodulation unabhängig vom Rauschanteil des Eingangssignals erzeugt wird. Die erfindungsgemäße Einrichtung weist in ihrer beispielhaften Ausführungsform gemäß Fig. 12 die Takteingänge $T_v$, $T_1$ und $T_2$ auf. Durch das Taktsignal $T_v$ wird die Übernahme und Weitergabe von Nutz- und Fehlersignalen in den Zwischenspeichereinrichtungen 32 xy gesteuert, das Taktsignal $T_1$ ist der untergeordneten und $T_2$ der übergeord-

neten Korrekturstufe zugeordnet. Da die Taktsignale von außen in die erfindungsgemäße Einrichtung eingegeben werden, ist die Filterwirkung dieser Einrichtung per Taktschema steuerbar. Die Filterwirkung ist für beispielhafte Taktschemata A, B und C dargestellt.

In Taktschema A wird nach der Übernahme der Nutz- und Fehlersignale durch das Taktsignal $T_v$ zunächst die Filterung durch die untergeordnete Korrekturstufe mit $T_1$ und anschließend die Filterung durch die übergeordnete Korrekturstufe mit $T_2$ ausgeführt. Durch das folgende Taktsignal $T_v$ wird zum einen das nunmehr gefilterte Nutzsignal N der letzten Zwischenspeichereinrichtung (32 ND in Fig. 3) weitergeleitet, zum anderen wird auch das nächste Nutzsignal N und das zugehörige Fehlersignal F in die ersten Zwischenspeichereinrichtungen 32 xA eingelesen, die übrigen Nutz- und Fehlersignale werden nur intern verschoben. Das Taktschema A bewirkt somit eine Filterung, wobei die Signale « einzeln durch die Filterkette geschoben » werden.

In Taktschema B ist demgegenüber jeder zweite Korrekturvorgang, bestehend aus $T_1$ und $T_2$, eingespart, wodurch die Signale in Blöcken von jeweils 2 Signalen gefiltert werden. Durch das Einsparen von Korrekturvorgängen werden folglich nicht die einzelnen Signalwerte, sondern Blöcke von Signalwerten gefiltert. Die Länge dieser Blöcke ist durch das Taktsignal $T_v$ steuerbar.

In Taktschema C ist schließlich jeweils der Korrekturschritt der untergeordneten Korrekturstufe eingespart. Dadurch werden die Signale einzeln durchgeschoben, wobei das erfindungsgemäße Filterverfahren hier jeweils auf Gruppen von vier Signalwerten angewandt wird (gegenüber zwei Signalwerten in Taktschema A).

Die Taktsignale $T_v$, $T_1$, und $T_2$ können auch in anderer Form kombiniert werden. So würde z. B. die Taktreihenfolge $T_v$, $T_v$, $T_2$ bewirken, daß die Filterung auf jeweils vier Signalwerte angewandt wird, wobei die Verarbeitung in Blöcken von zwei Signalwerten erfolgen würde.

Die beste Filterwirkung wird mit Taktschema A erzielt, während die übrigen Filterschemata eine beschleunigte Verarbeitung ermöglichen.

## Patentansprüche

1. Filter-Verfahren zum Minimieren von durch Digitalisieren verursachten Aufzeichnungs-Fehlern bei der digitalen Verarbeitung elektrischer Signale, dadurch gekennzeichnet, daß ein digitales Eingangssignal (31, 41, 71, 91) in ein digitales Nutzsignal (32a, 42a, 72a, 91a) und in ein digitales Fehlersignal (32b, 42b, 72b, 92b), welches die Abweichung des Nutzsignals vom Eingangssignal wiedergibt, zerlegt wird, indem das Eingangssignal entsprechend einer vorgegebenen niedrigeren Auflösung als das Eingangssignal in das Nutzsignal mit so viel Digitalstufen umgewandelt wird, wie der vorgegebenen niedrigeren Auflösung entsprechen und indem das Fehlersignal durch Vergleich des Eingangssignals mit dem Nutzsignal erzeugt wird, daß für mehrere Werte des Nutzsignals aus den jeweiligen Fehlersignalen ein Summenfehler (32c, 42c, 72c, 92c) gebildet wird, indem die jeweiligen Fehlersignale addiert werden, daß geprüft wird, ob der Summenfehler von mehreren aufeinanderfolgenden Nutzsignalwerten jeweils einen vorgegebenen oberen oder unteren Schwellwert überschreitet, daß im Falle, daß ein Schwellwert überschritten wird, derjenige Fehlerwert des Nutzsignals ermittelt wird, der diesem Schwellwert am nächsten kommt und daß das Nutzsignal und damit das Fehlersignal dieses Signalwertes derart korrigiert werden, daß der Summenfehler wieder den Schwellwert unterschreitet, indem mindestens eine der Digitalstufen des Nutzsignals geändert wird.

2. Verfahren nach Anspruch 1, dadurch gekennzeichnet, daß im Falle, daß bei der Korrektur die Schwelle nicht unterschritten wird, nochmals derjenige Fehlerwert des Nutzsignals ermittelt wird, der der überschrittenen Schwelle am nächsten kommt, und daß das Nutzsignal und das Fehlersignal dieses Signalwertes derart korrigiert werden, daß der Summenfehler wieder den Schwellwert unterschreitet.

3. Verfahren nach Anspruch 1 oder 2, dadurch gekennzeichnet, daß zunächst die Summenfehler von Untergruppen mit jeweils mehreren aufeinanderfolgenden Nutzsignalwerten gebildet werden und gegebenenfalls innerhalb jeder Untergruppe die jeweiligen Korrekturen ausgeführt werden und daß danach der Gesamtfehler aus der Summe der verbleibenden Restsummenfehler der Untergruppe gebildet und gegebenenfalls eine oder mehrere Korrekturschritte eingeleitet werden, so daß auch der Gesamtfehler den Schwellwert nicht mehr überschreitet.

4. Verfahren nach einem der Ansprüche 1, 2 oder 3, dadurch gekennzeichnet, daß das Korrekturverfahren zunächst auf die untergeordnetste Untergruppe, und dann immer jeweils auf die nächst höher geordnete Untergruppe und zuletzt auf die übergeordnete Gruppe angewandt wird.

5. Verfahren nach Anspruch 1 oder 2, dadurch gekennzeichnet, daß zuerst der Gesamtfehler der übergeordneten, in Untergruppen unterteilten Gruppe von Nutzsignalwerten ermittelt wird, und daß, wenn der Gesamtfehler einen Schwellwert überschreitet, diejenige Untergruppe ermittelt wird, deren Summenfehler dieser Fehlerschwelle am nächsten kommt, und anschließend in der ermittelten Untergruppe derjenige Fehlerwert des Nutzsignals ermittelt wird, der diesem Schwellwert am nächsten kommt, und daß Nutzsignal und Fehlersignal dieses Signalwertes derart korrigiert werden, daß der Summenfehler der ermittelten Untergruppe dem Schwellwert nicht mehr nahe kommt und zugleich der Gesamtfehler der übergeordneten Gruppe den Schwellwert wieder unterschreitet.

6. Verfahren nach den Ansprüchen 1 und 2, dadurch gekennzeichnet, daß es für ein vorgegebenes Aufzeichnungsraster angewandt wird.

7. Verfahren nach den Ansprüchen 1, 2 und 3 oder 1, 2, 3 und 4, dadurch gekennzeichnet, daß die Bildung der Gruppen und Untergruppen anhand der Signalwerte selbst und/oder anhand des Verarbeitungsrasters erfolgt.

8. Verfahren nach einem der Ansprüche 1, 2, 3, 4 oder 7, dadurch gekennzeichnet, daß die Untergruppen schrittweise dadurch entstehen, daß das Fehlersignal des ersten Signalwertes aus einer größeren Gruppe von Signalwerten gespeichert wird, daß das Fehlersignal eines benachbarten Signalwertes zu dem Speicherwert hinzuaddiert und das zugehörige Nutzsignal dieser Untergruppe zugeordnet werden, und daß gegebenenfalls weitere Signalwerte dieser Untergruppe zugeordnet werden, so daß schließlich der Speicherwert, der also dem Summenfehler dieser Untergruppe entspricht, eine vorgegebene Schwelle unterschreitet, wodurch diese Untergruppe dann vollständig ist und in derselben Weise die folgenden Untergruppen gebildet werden, bis alle Signalwerte der größeren Gruppe einer Untergruppe zugeordnet sind.

9. Verfahren nach einem der Ansprüche 1, 2, 3, 4 oder 7, dadurch gekennzeichnet, daß die Untergruppen schrittweise dadurch entstehen, daß das Fehlersignal des ersten Signalwertes aus einer größeren Gruppe von Signalwerten gespeichert wird, daß überprüft wird, ob ein benachbarter Signalwert aus der größeren Gruppe etwa denselben Signalpegel hat und in diesem Fall dann das Fehlersignal des benachbarten Signalwertes zu dem Speicherwert hinzuaddiert und das zugehörige Nutzsignal dieser Untergruppe zugeordnet werden, wogegen andernfalls dieser Signalwert später einer anderen Untergruppe zugeordnet wird, und daß das Ermitteln weiterer Signalwerte dieses Signalpegels dann abgebrochen wird, wenn der Speicherwert, der dem Summenfehler der Untergruppe entspricht, eine vorgegebene Schwelle unterschreitet, wodurch diese Untergruppe vollständig ist und in derselben Weise die folgenden Untergruppen gebildet werden, bis alle Signalwerte der größeren Gruppe einer Untergruppe zugeordnet sind.

10. Verfahren nach Anspruch 8 oder 10, dadurch gekennzeichnet, daß eine Untergruppe aus nur einem Element besteht, wenn deren Fehlersignal bereits innerhalb der vorgegebenen Schwelle liegt.

11. Verfahren nach Anspruch 8 oder 10 und 11, dadurch gekennzeichnet, daß der Schwellpunkt für einzelne Punkte von dem Schwellwert für Untergruppen verschieden sein kann.

12. Verfahren nach Anspruch 8 oder 10, dadurch gekennzeichnet, daß die Schwellwerte in Abhängigkeit von der Größe der Untergruppe variiert werden.

13. Einrichtung zur Durchführung des Verfahrens nach Anspruch 1, gekennzeichnet durch eine mit dem digitalen Eingangssignal (31, 41, 71, 91) verbundene Signalauswerteschaltung (14a, 14b), durch die das digitale Eingangssignal hoher Auflösung in ein Nutzsignal (32a, 42a, 72a, 92a) niedrigerer Auflösung als das Eingangssignal und in ein Fehlersignal (32b, 42b, 72b, 92b) niedrigerer Auflösung als das Eingangssignal aufgespalten wird, das die Abweichung des Nutzsignals vom Eingangssignal wiedergibt, eine erste Zwischenspeichereinrichtung (Fig. 12 : 32 ; Fig. 15) für das Nutzsignal, die mit der Auswerteschaltung verbunden ist und Eingabemittel aufweist, um das gespeicherte Nutzsignal mit einem Korrektursignal zu beaufschlagen, eine zweite Zwischenspeichereinheit (Fig. 8 : 84) für das Fehlersignal, die mit der Auswerteschaltung verbunden ist und die mit einem Addierwerk (Fig. 17 : $F_{AB}$) zur Ermittlung des Summenfehlers (Fig. 17 : Teil B) der in der zweiten Speichereinrichtung gespeicherten Fehlersignale sowie mit zwei mit dem Addierwerk verbundenen Schwellwertstufen (Fig. 17 : Komp.), durch die der Summenfehler mit einem oberen und einem unteren Schwellwert (52) verglichen wird, verbunden ist, eine Extremwert-Erfassungsschaltung (Fig. 17 : Teil A), die mit der zweiten Speichereinrichtung verbunden ist und die die Speicherplätze ermittelt, an denen die extremen Fehlersignale abgespeichert sind und durch eine Schaltung (Fig. 17 : Teil C), die entsprechend der überschrittenen Schwelle und dem zugehörigen Extremwert festlegt, welches Element korrigiert wird und ob die Korrektur im positiven oder negativen Sinne erfolgt.

14. Einrichtung gemäß Anspruch 13, dadurch gekennzeichnet, daß mehrere Schaltungen zum Erfassen der Extremwerte und zum Festlegen der Korrektur von untergeordneten Gruppen verwandt werden, um den Aufbau komplexer Korrektur-Hierarchien zu erreichen.

15. Einrichtung gemäß Anspruch 14, dadurch gekennzeichnet, daß die Korrekturschritte mittels eines Taktsignals in jeder Schaltung zum Erfassen der Extremwerte und zum Festlegen der Korrektur lösbar sind.

16. Einrichtung gemäß Anspruch 13, gekennzeichnet durch eine weitere Speichereinrichtung für die digitalen Eingangssignale und durch eine weitere Schwellwertstufe zum Vergleich der Signalpegel der Eingangssignale.

**Claims**

1. Filtering method for minimising recording defects caused by digitalisation during the digital processing of electrical signals, characterised in that a digital input signal (31, 41, 71, 91) is divided into a digital utilisation signal (32a, 42a, 72a, 91a) and into a digital defect signal (32b, 42b, 72b, 92b) which reproduces the deviation of the utilisation signal from the input signal, by converting the input signal in accordance with a predetermined lower resolution than the input signal into the utilisation signal with as

**0 132 453**

many digital stages as correspond to the predetermined lower resolution, and the defect signal is generated by comparison of the input signal with the utilisation signal, that a summated defect or error (32c, 42c, 72c, 92c) is formed from the prevailing defect signals for several values of the utilisation signal, by adding the corresponding defect signals, that a check is made one whether the summated defect of several consecutive utilisation signal values exceeds a preset upper or lower threshold value in each case, that in the case in which a threshold value is exceeded, the defect or error value of the utilisation signal determined is that which comes closest to this threshold value, and that the utilisation signal and thus the defect signal having this signal value are corrected in such a manner that the summated defect drops again below the threshold value, by altering at least one of the digital stages of the utilisation signal.

2. Method according to claim 1, characterised in that if the threshold is still exceeded during the correcting operation, the defect value which comes closest to the exceeded threshold is again determined, and that the utilisation signal and the defect signal of this signal value are corrected in such manner that the summated defect drops below the threshold value again.

3. Method according to claim 1 or 2, characterised in that the summated defects of subgroups are initially determined with several consecutive utilisation signal values in each case, and the corresponding corrections are performed within each subgroup if applicable, and that the total defect or error is thereupon determined from the sum of the remanent residual summated defects of the subgroup and one or more corrective steps are initiated if appropriate, so that even the total defect no longer exceeds the threshold value.

4. Method according to any one of claims 1, 2 or 3, characterised in that the corrective method is initially applied to the most subordinate subgroup, and thereupon in each case to the subgroup of the next higher order, and finally to the superordinated group.

5. Method according to claim 1 or 2, characterised in that the total defect or error of the superordinated group of utilisation signal values divided into subgroups is determined initially, and that if the total defect exceeds a threshold value, it is the subgroup which comes closest to this defect threshold with its summated defect which is determined, and that the defect value of the utilisation signal which comes closest to this threshold value which is thereupon established in the subgroup determined, and that the utilisation signal and defect signal having this signal value are then corrected in such manner that the summated defect of the subgroup determined no longer comes close to the threshold value and the overall defect of the superordinated group again drops below the threshold value.

6. Method according to claims 1 and 2, characterised in that it is utilised for a predetermined recording screen.

7. Method according to claims 1, 2 and 3 or 1, 2, 3 and 4, characterised in that the forming of the groups and subgroups is performed by reference to the signal values as such and/or by reference to the processing screen.

8. Method according to any one of claims 1, 2, 3, 4 or 7, characterised in that the subgroups are formed step by step by the fact that the defect or error signal having the first signal value is stored out of a larger group of signal values, that the defect signal of an adjacent signal value is added to the value stored and the corresponding utilisation signal is allocated to this subgroup, and that other signal values are allocated to this subgroup if appropriate, so that the stored value which thus corresponds to the summated defect of this subgroup then finally drops below a present threshold, this subgroup then being completed thereby, and the following subgroups being formed in the same manner until all signal values of the larger group are allocated to a subgroup.

9. Method according to any one of claims 1, 2, 3, 4 or 7, characterised in that the subgroups are formed step by step by the fact that the defect signal of the first signal value is stored out of a larger group of signal values, that a check is made on whether an adjacent signal value of the larger group perhaps has the same signal level, and in this case, the defect signal of the adjacent signal value may then be added to the stored value and the corresponding utilisation signal may be allocated to this subgroup, whereas this signal value is otherwise subsequently allocated to another subgroup, and that the determination of other signal values of this signal level is then stopped when the value stored which corresponds to the summated defect of the subgroup drops below a predetermined threshold, this subgroup thereby being complete and the following subgroups being formed in the same manner until all the signal values of the larger group are allocated to a subgroup.

10. Method according to claim 8 or 10, characterised in that a subgroup comprises one element only if its defect or error signal already lies within the preset threshold.

11. Method according to claim 8 or 10 and 11, characterised in that the threshold level for individual points may differ from the threshold value for subgroups.

12. Method according to claim 8 or 10, characterised in that the threshold values are varied as a function of the size of the subgroup.

13. System for implementation of the method according to claim 1, characterised by a signal evaluator circuit (14a, 14b) connected to the digital input signal (31, 41, 71, 91) whereby the digital input signal of high resolution is divided into a utilisation signal (32a, 42a, 72a, 92a) of lower resolution than the input signal and into an error signal (32b, 42b, 72b, 92b) of lower resolution than the input signal, which reproduces the deviation of the utilisation signal from the input singal, a first intermediate storage system (Fig. 12 : 32 : Fig. 15) for the utilisation signal which is connected to the evaluator circuit and comprises

13

input means to act on the stored utilisation signal by means of a corrective signal, a second intermediate storage unit (Fig. 8 : 84) for the error signal, which is connected to the evaluator circuit and which is connected to an adding mechanism (Fig. 17 : $F_{AB}$) for determination of the summated error (Fig. 17 : part B) of the error signals stored in the second storage system, as well as two threshold value stages (Fig. 17 : Comp) connected to the adding mechanism, whereby the summated errors are compared to an upper and lower threshold value (52), an extreme value detection circuit (Fig. 17 : part A), which is connected to the second storage system and which detects the storage points at which the extreme error signals are stored, and by a circuit (Fig. 17, part C) which in accordance with the threshold exceeded and with the corresponding extreme value determines which element is to be corrected and whether the correction is to be made in the positive or negative direction.

14. System according to claim 13, characterised in that use is made of several circuits for determining the extreme values and for determining the correction of subordinated groups to accomplish the accumulation of complex corrective hierarchies.

15. System according to claim 14, characterised in that the corrective steps may be triggered by means of a clock signal in each circuit for determining the extreme values and for establishing the corrective operation.

16. System according to claim 13, characterised by another storage system for the digital input signal and by another threshold value stage for comparison of the signal levels of the input signals.

## Revendications

1. Procédé de filtration pour minimiser les défauts d'enregistrement provoqués par la mise sous forme numérique lors du traitement numérique de signaux électriques, procédé caractérisé en ce qu'un signal numérique d'entrée (31, 41, 71, 91) est décomposé en un signal numérique utile (32a, 42a, 72a, 91a) et en un signal numérique de défaut (32b, 42b, 72b, 92b), qui restitue l'écart du signal utile par rapport au signal d'entrée, en ce que le signal d'entrée, de façon correspondante à une résolution prédéfinie plus basse que le signal d'entrée, est convertie en le signal utile avec autant d'étages numériques qu'il en correspond à la résolution prédéfinie plus basse, et en ce que le signal de défaut est obtenu par comparaison du signal d'entrée avec le signal utile, en ce que pour plusieurs valeurs du signal utile, un défaut total (32c, 42c, 72c, 92c) est formé à partir des signaux de défauts correspondants, en totalisant ces défauts de signaux correspondants, en ce que l'on contrôle si le défaut total de plusieurs valeurs successives du signal utile dépasse respectivement une valeur de seuil supérieure, ou bien une valeur de seuil prédéfinie, en ce que dans le cas où une valeur de seuil est dépassée, on détermine la valeur de défaut du signal utile qui est le plus proche de cette valeur de seuil et que le signal utile et donc le signal de défaut de cette valeur de signal, sont corrigés de façon que le défaut total se situe à nouveau au-dessous de la valeur de seuil en changeant au moins un des étages numérique du signal utile.

2. Procédé selon la revendication 1, caractérisé en ce que dans le cas où lors de la correction le seuil n'est pas franchi vers le bas, on détermine encore une fois la valeur de défaut du signal utile qui se rapproche le plus du seuil dépassé, et que le signal utile et le signal de défaut de cette valeur de signal sont corrigés de façon que le défaut total se situe à nouveau au-dessous de la valeur de seuil.

3. Procédé selon la revendication 1 ou 2, caractérisé en ce que tout d'abord, les défauts totaux sont constituée de sous-groupes avec respectivement plusieurs valeurs successives du signal utile et qu'éventuellement, à l'intérieur de chaque sous-groupe, les corrections correspondantes sont effectuées et qu'ensuite, le défaut total est formé à partir de la somme des défauts totaux résiduels subsistants des sous-groupes, et qu'éventuellement, une ou plusieurs étapes de correction sont déclenchées, de sorte que le défaut total ne dépasse plus la valeur de seuil.

4. Procédé selon une des revendications 1, 2 ou 3, caractérisé en ce que le procédé de correction est tout d'abord appliqué aux sous-groupes de l'ordre le plus inférieur, et ensuite toujours respectivement aux sous-groupes d'ordre immédiatement plus élevé, et finalement aux groupes d'ordre supérieur.

5. Procédé selon la revendication 1 ou 2, caractérisé en ce qu'on détermine tout d'abord le défaut total des groupes de valeur du signal utile d'ordre supérieur, divisé en sous-groupes, et que, lorsque ce défaut total dépasse une valeur de seuil, on détermine les sous-groupes dont le défaut total est le plus proche de ce seuil de défaut et enfin, dans le sous-groupe ainsi déterminé, on détermine la valeur de défaut du signal utile qui se rapproche le plus de cette valeur de seuil, et que le signal utile et le signal de défaut de cette valeur de signal sont corrigés de façon que le défaut total du sous-groupe déterminé ne soit pas plus proche de cette valeur de seuil et qu'en même temps, le défaut total des groupes d'ordres supérieurs, se situe à nouveau au-dessous de la valeur de seuil.

6. Procédé selon les revendications 1 et 2, caractérisé en ce qu'il est appliqué pour une trame d'enregistrement prédéfinie.

7. Procédé selon les revendications 1, 2 et 3 ou bien 1, 2, 3 et 4, caractérisé en ce que la formation des groupes et des sous-groupes s'effectue à l'aide des valeurs du signal elles-mêmes et/ou à l'aide de la trame de traitement.

8. Procédé selon une des revendications 1, 2, 3, 4 ou 7, caractérisé en ce que les sous-groupes se forment de proche en proche du fait que le signal de défaut de la première valeur de signal est mémorisé à

14

partir d'un groupe plus important de valeur de signal, que le signal de défaut d'une valeur de signal voisine ajoutée à la valeur mémorisée et le signal utile correspondant sont associés à ce sous-groupe, et qu'éventuellement, d'autres valeurs de signal sont associées à ce sous-groupe, de sorte que finalement, la valeur mémorisée qui correspond ainsi au défaut total de ce sous-groupe, franchit vers le bas un seuil prédéfini, grâce à quoi ce sous-groupe est alors complet et les sous-groupes suivants sont formés de la même façon jusqu'à ce que toutes les valeurs de signal du groupe plus important, soient associées à un sous-groupe.

9. Procédé selon une des revendications 1 2, 3, 4 ou 7, caractérisé en ce que les sous-groupes se forment de proche en proche en ce que le signal de défaut de la première valeur de signal est mémorisé à partir d'un groupe plus important de valeur de signal, que l'on vérifie si une valeur de signal voisine faisant partie de ce groupe plus important a à peu près le même niveau de signal et que, dans ce cas, le signal de défaut de cette valeur voisine de signal ajoutée à la valeur mémorisée et le signal utile correspondant, sont associés à ce sous-groupe, tandis que dans l'autre cas, cette valeur de signal est associée ultérieurement à un autre sous-groupe et que le dépistage d'autres valeurs de signal de ce niveau de signal, est alors arrêté lorsque la valeur mémorisée qui correspond au défaut total du sous-groupe, franchit vers le bas un seuil prédéfini, grâce à quoi, ce sous-groupe est complet et les sous-groupes suivants sont formés de la même façon jusqu'à ce que toutes les valeurs de signal du groupe plus important, soient associées à un sous-groupe.

10. Procédé selon la revendication 8 ou 10, caractérisé en ce qu'un sous-groupe est constitué d'un seul élément lorsque son signal de défaut se situe déjà à l'intérieur du seuil prédéfini.

11. Procédé selon la revendication 8 ou 10 et 11, caractérisé en ce que le point de seuil pour des points individuels, peut être différent de la valeur de seuil pour les sous-groupes.

12. Procédé selon la revendication 8 ou 10, caractérisé en ce que les valeurs de seuil peuvent être modifiées en fonction de l'importance du sous-groupe.

13. Dispositif pour la mise en oeuvre du procédé selon la revendication 1, caractérisé en ce qu'il comporte un circuit d'exploitation de signaux (14a, 14b) relié au signal numérique d'entrée (31, 41, 71, 91), et grâce auquel le signal numérique d'entrée de haute résolution, est scindé en un signal utile (32a, 42a, 72a, 92a) de résolution plus basse que le signal d'entrée et en un signal de défaut (32b, 42b, 72b, 92b) de résolution plus basse que le signal d'entrée, qui restitue l'écart entre le signal utile et le signal d'entrée, un premier dispositif de mémorisation intermédiaire (figure 12 : 32 ; figure 15) étant prévu pour le signal utile, ce dispositif étant relié au circuit d'exploitation et comportant des moyens d'introduction pour affecter au signal utile mémorisé un signal de correction, une seconde unité de mémorisation intermédiaire (figure 8 : 84) étant prévue pour le signal de défaut, unité qui est reliée au circuit d'exploitation et qui est reliée à un totalisateur (figure 17 : $F_{AB}$) pour la détermination du défaut total (figure 17 : partie B) des signaux de défaut mémorisés dans le second dispositif de mémorisation, ainsi qu'avec deux étages à valeur de seuil (figure 17 : Komp), reliés au totalisateur, et grâce auxquels le défaut total est comparé avec une valeur de seuil supérieure et une valeur de seuil inférieure (52), le dispositif comportant un circuit de dépistage de valeur extrême (figure 17 : partie A) qui est relié au second dispositif de mémorisation et qui recherche les emplacements de mémoire où les signaux extrêmes de défauts sont mémorisés, un circuit (figure 17 : partie C) étant prévu qui, en fonction du seuil franchit vers le haut et de la valeur extrême correspondante, détermine quel élément va être corrigé, et si la correction s'effectue dans le sens positif ou dans le sens négatif.

14. Dispositif selon la revendication 13, caractérisé en ce que plusieurs circuits sont utilisés pour détecter les valeurs extrêmes et pour déterminer la correction de groupes de rangs inférieurs, afin d'obtenir la constitution des hiérarchies de corrections complexes.

15. Dispositif selon la revendication 14, caractérisé en ce que les étapes de corrections sont susceptibles d'être déclenchées au moyen d'un signal de synchronisation dans chaque circuit pour le dépistage des valeurs extrêmes et pour la détermination de la correction.

16. Dispositif selon la revendication 13, caractérisé en ce qu'il comporte un autre dispositif de mémorisation pour les signaux numériques d'entrée et un autre étage à valeur de seuil pour comparer le niveau des signaux d'entrée.

Fig.1

Fig. 2

|  |  |  |
|---|---|---|
| 139 | 145 | 144 |
| 147 | 128 | 132 |
| 131 | 129 | 133 |

~31

**32a**

|  |  |  |
|---|---|---|
| 9 | 9 | 9 |
| 9 | 8 | 8 |
| 8 | 8 | 8 |

**32b**

|  |  |  |
|---|---|---|
| +5 | −1 | ±0 |
| −3 | ±0 | −4 |
| −3 | −1 | −5 |

**32c**

− 12

**33a**

|  |  |  |
|---|---|---|
| 9 | 9 | 9 |
| 9 | 8 | 8 |
| 8 | 8 | 9 |

**33b**

|  |  |  |
|---|---|---|
| +5 | −1 | ±0 |
| −3 | ±0 | −4 |
| −3 | −1 | +11 |

**33c**

+ 4

# Fig.3

Fig. 4

0 132 453

| VA | 139 | 140 | 144 | 141 | 137 | 128 | 132 | 138 | 131 | 129 | 133 | 130 | 131 | 125 | 134 | 135 |
|---|---|---|---|---|---|---|---|---|---|---|---|---|---|---|---|---|
| VD | 9 | 9 | 9 | 9 | 9 | 8 | 8 | 9 | 8 | 8 | 8 | 8 | 8 | 8 | 8 | 8 |
| VF | +5 | +4 | 0 | +3 | +7 | 0 | -4 | +6 | -3 | -1 | -5 | -2 | -3 | +3 | -6 | -7 |
| VA 1 | +9 | | +3 | | +7 | | +2 | | -4 | | -7 | | 0 | | -13 | |
| VA 2 | +12 | | | | +9 | | | | -11 | | | | -13 | | | |
| VA 3 | +21 | | | | | | | | -24 | | | | | | | |
| VA 4 | -3 | | | | | | | | | | | | | | | |

Fig. 5a

| | | | | | | | | | | | | | | | | |
|---|---|---|---|---|---|---|---|---|---|---|---|---|---|---|---|---|
| VA 4 | -3 | | | | | | | | | | | | | | | |
| VA 3 | +5 | | | | | | | | -8 | | | | | | | |
| VA 2 | -4 | | | | +9 | | | | -11 | | | | +3 | | | |
| VA 1 | -7 | | +3 | | +7 | | +2 | | -4 | | -7 | | 0 | | +3 | |
| VF | -11 | +4 | 0 | +3 | +7 | 0 | -4 | +6 | -3 | -1 | -5 | -2 | -3 | +3 | -6 | +9 |
| VD | 8 | 9 | 9 | 9 | 9 | 8 | 8 | 9 | 8 | 8 | 8 | 8 | 8 | 8 | 8 | 9 |

Fig. 5b

Fig. 6

Fig. 7

Fig. 8

Fig. 9

Eingangsspeicher 101

Digitalumformer 102

Dichtestufenspeicher 103

Fehlerspeicher 104

Korrekturrechner 105

Zeilenrandspeicher 106

Spaltenrandspeicher 107

Fig.10

10

Fig. 11

Fig.12

Fig.13

Fig.14a

Fig. 14 b

Fig.15

**0 132 453**

Fig.16

Fig.17

Fig.18

Fig.19

Fig. 20

Fig. 21